Europäisches Patentamt

European Patent Office

Office européen des brevets

(19)

(11) Publication number: 0 585 462 A1

# EUROPEAN PATENT APPLICATION
## published in accordance with Art. 158(3) EPC

(12)

(21) Application number: 92921287.6

(22) Date of filing: 08.10.92

(86) International application number:
PCT/JP92/01308

(87) International publication number:
WO 93/07343 (15.04.93 93/10)

(51) Int. Cl.⁵: **E02F 3/43**, E02F 9/20, E02F 9/22

(30) Priority: 08.10.91 JP 260851/91

(43) Date of publication of application:
09.03.94 Bulletin 94/10

(84) Designated Contracting States:
DE GB SE

(71) Applicant: KABUSHIKI KAISHA KOMATSU
SEISAKUSHO
3-6, Akasaka 2-chome
Minato-ku Tokyo 107(JP)

(72) Inventor: GOCHO, Tomohiro Nippon Hodo
Kabushiki Kaisha
19-11, Kyobashi 1-chome
Chuo-ku Tokyo 104(JP)
Inventor: YAMABE, Narimasa Nippon Hodo
Kabushiki Kaisha
19-11, Kyobashi 1-chome
Chuo-ku TOkyo 104(JP)
Inventor: OMIYA, Kazutaka Nippon Hodo
Kabushiki Kaisha
19-11, Kyobashi 1-chome
Chuo-ku Tokyo 104(JP)
Inventor: HAMAGUCHI, Takehisa Nippon Hodo
Kabushiki Kaisha
19-11, Kyobashi 1-chome
Chuo-ku Tokyo 104(JP)
Inventor: KAMIKAWA, Katsuhiro Kabushiki
Kaisha Komatsu

Seisakusho Kenkyusho
1200, Manda
Hiratsuka-shi Kanagawa 254(JP)
Inventor: ONO, Toyoichi Kabushiki Kaisha
Komatsu Seisakusho
Kenkyusho
1200, Manda
Hiratsuka-shi Kanagawa 254(JP)
Inventor: TANABE, Kenji Kabushiki Kaisha
Komatsu Seisakusho
Kenkyusho
1200, Manda
Hiratsuka-shi Kanagawa 254(JP)
Inventor: HITOMI, Shinichi Kabushiki Kaisha
Komatsu Seisaku
sho Kenkyusho
1200, Manda
Hiratsuka-shi
Kanagawa 254(JP)
Inventor: MORI, Masaki Kabushiki Kaisha
Komatsu Seisakusho
Kenkyusho
1200, Manda
Hiratsuka-shi Kanagawa 254(JP)

(74) Representative: Newstead, Michael John et al
Page Hargrave
Temple Gate House
Temple Gate
Bristol BS1 6PL (GB)

(54) **DEVICE FOR CONTROLLING WORKING VEHICLE IN MATERIAL TRANSFER SYSTEM.**

(57) A material transfer system provided with a command station and used for transferring materials stocked at a material stock yard to a hopper by means of an automatically travellable working vehicle

EP 0 585 462 A1

that communicates with said command station, in which: a plurality of different tasks to be done by the working vehicle are divided into fundamental work patterns each not common to the others; work patterns thus divided are taken out one by one from a plurality of said tasks so as not to be common to each other and a plurality of fundamental work pattern programs respectively corresponding to a plurality of taken-out fundamental work patterns are stored in memory; when a work instruction from said command station is inputted, a combination of a plurality of said fundamental work pattern programs corresponding to said work instruction is prepared by reading out data stored in said memory, whereby tasks are automatically conducted on the basis of said combination of programs and memory efficiently is improved preparing a redundancy-free and efficient work program to be performed by the working vehicle so that flexible programs can be prepared when a new task is required.

FIG.1

## TECHNICAL FIELD

The present invention relates to a working vehicle controlling apparatus in a material conveying system wherein various kinds of tasks to be done by operating a working vehicle, e.g., a material conveying operation, a piling operation, an arching preventive operation, a transverse conveying operation and so forth can automatically be executed at a factory for preparing asphalt, concrete or the like including a shed serving as a material stock yard and a hopper serving as a material dumping site.

## BACKGROUND ART

At factories for preparing asphalt, concrete or the like, an operator performs various kinds of operations by operating a working machine such as a wheel loader, a pay loader, a tractor shovel or the like each including booms and a bucket. In such factories, it has been requested to automatize these operations. To realize the automation, programs for controlling the working machine were prepared by simply listing a series of operations obtained by asking questions to operators. However, the programs thus prepared had redundant portions due to repeated listing of common operations. As a result, the programs became long and memories could not be used efficiently because they stored the long programs. Further, the programs were short of flexibility in applying them to new operations.

Among the operations which are performed by a working vehicle of the type including booms and a bucket, there is an operation for scooping sand and crashed rock in a shed. In automatizing this operation, conventional technologies have the following problems. The conventional technologies for automatizing the scooping operation are disclosed in Japanese Patent Application Nos. 61-29526, 61-65181 and 61-65182. According to the conventional technologies, a horizontal component of the excavation resistance to be received by the bucket (horizontal excavation resistance) and a vertical component of the excavation resistance to be received by the bucket (vertical excavation resistance) are successively calculated, and a boom raising/lowering operation is performed by actuating a boom cylinder and a bucket tilting/dumping operation is performed by actuating a bucket cylinder in such a manner as to allow the horizontal excavation resistance and the vertical excavation resistance coincide with preset values, whereby excavating and scooping operations are automatized.

In practice, however, the conventional automatized scooping operation is restricted to automatic excavating and scooping operations for a working vehicle. Thus, there arises a problem that a calculation load for this operation is excessively large. Namely, if a working vehicle is fully automatized in which not only working tools of the working vehicle but also a driving unit, a braking unit and a steering unit of the working vehicle are automatized with the aid of a microcomputer, a calculation load to be borne by the microcomputer for the conventional automatic scooping operation is very large, resulting in that other control items are performed with delay.

Screening, fine sand, coarse sand, crushed rock and asphalt waste can be noted as typical materials to be scooped by the working vehicle. Among these materials, the asphalt waste contains high adhesive particles and other materials are of low adhesion. In this specification, a material is highly adhesive if the material stacked in a mountain shape is hardly broken and the material particles are hardly loosened or separated from each other while low adhesiveness is referred to as the state that a stacked material is easily broken and the material particles are easily loosened or separated from each other.

When the sizes of particles are compared among the materials of low adhesiveness, the result of the comparison is represented by the following inequalities.

Screening < Fine sand < Coarse sand < Crushed rock

It should be noted that the screening and the fine sand become highly adhesive when they contain moisture.

A factor contributing to increasing the amount of a material filled in a bucket at the time of a material scooping operation is not the particle size of the material but the adhesiveness of the material as well as a mountain-shaped geometrical configuration in which the material is stacked.

In the conventional technologies, control for the material scooping is performed without considering the adhesiveness of the material and the geometrical configuration of the stacked material. For this reason, the amount of the material scooped in the bucket is small for some materials.

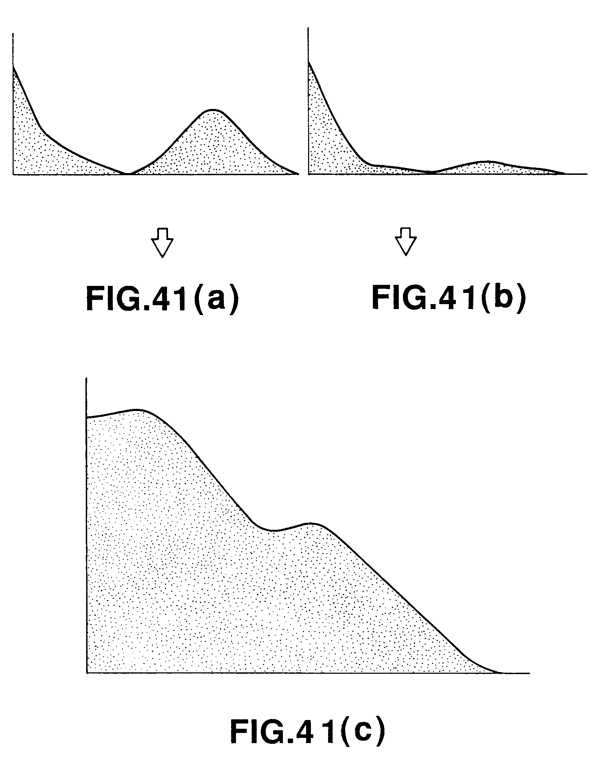

When an operator operates a working vehicle to convey a material such as sand, crushed rock or the like from the shed to the hopper in the factory, there arises an occasion that the material is not piled in good geometrical configuration as shown in Fig. 41(a) or Fig. 41(b), resulting in that the material cannot be sufficiently scooped by the bucket of the working vehicle. This occurs mainly when a dump truck enters into the working site to dump the carrying material. In such an occasion, a piling operation is performed, during the time when the material is not conveyed to the hopper, by operating the working vehicle so as to scoop up the material up to the deep inside of the shed as shown in Fig. 41(c), thereby to enable the material to be easily scooped by the bucket.

However, since the conventional manual piling operation is not efficient, it has been requested by users to develop a full automation for the piling operation.

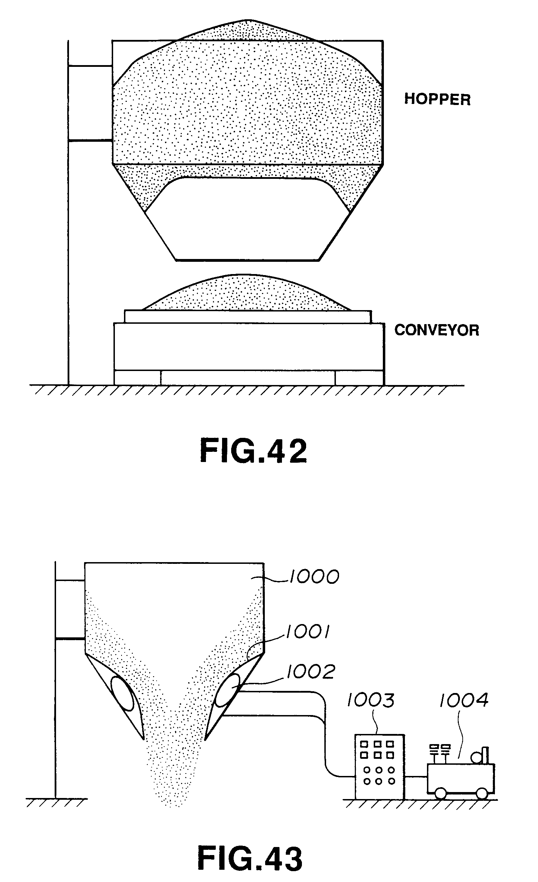

Further, there arises an occasion that the material in the hopper at the factory exhibits an arching state as shown in Fig. 42, in which only the material stored at the lower part of the hopper falls into a conveyor, the material stored at the upper part of the hopper remaining in the hopper. Once the arching state appears, an arching preventive operation must be performed. The arching preventive operation is performed by an operator using a tool such as a scoop in the hopper or operating a working vehicle to shaking the hopper or to scoop the material in the hopper and then dumping the scooped material.

Fig. 43 illustrates a conventional arching preventive mechanism adapted to operate without manual operation. The mechanism of Fig. 43 is constructed such that the inner wall surface of a hopper 1000 is lined with a layer of cover rubber 1001 inside of which a plurality of air bags 1002 are arranged in such a manner as to allow the air bags 1002 to expand and shrink with the aid of a compressor 1004 and an air control panel 1003 to perform an arching preventive operation.

However, the conventional manual arching preventive mechanism has a drawback that the operation is dangerous and low efficient. In addition, since it is necessary to line the entire inner wall surface of the hopper 1000 with the cover rubber 1001 to effect the arching preventive mechanism, it becomes expensive.

In the preparing factory, a main operation is to scoop a material piled in the shed and convey the scooped material to the hopper. However, it is inconvenient to dump a material wetted with moisture in the hopper. Thus, a transverse conveying operation is performed in a fine day in which a wet material is conveyed to a unroofed shed at which it is dried by exposure to sunlight. However, since the transverse conveying operation has been hitherto performed by an operator operating the working vehicle, it is achieved at a low efficiency.

The present invention has been made in consideration of the foregoing background.

An object of the present invention is to provide a working vehicle controlling apparatus in a material conveying system which assures that an operation program for a working vehicle can be prepared with a high memory efficiency without redundancy and with excellent flexibility so as to be applied to any new tasks.

Another object of the present invention is to provide a working vehicle controlling apparatus in a material conveying system which assures that when the apparatus is used to operate a working vehicle for controlling various kinds of operations, a calculation load to be borne by a microprocessor can be reduced and operation can be achieved at a high speed.

Still another object of the present invention is to provide a working vehicle controlling apparatus in a material conveying system which assures that the amount of a rate of fully filling a bucket with a material at the time of a material scooping operation can be improved irrespective of the kind of a material to be scooped.

Further object of the present invention is to provide a working vehicle controlling apparatus in a material conveying system which assures that a full automatic piling operation can be achieved by a working vehicle with simple controlling structure.

Further another object of the present invention is to provide a working vehicle controlling apparatus in a material conveying system which assures that a full automatic arching preventive operation can be achieved by a working vehicle with simple and inexpensive controlling structure.

Still further another object of the present invention is to provide a working machine controlling apparatus in a material conveying system which assures that a full automatic transverse conveying operation can be achieved by a working machine with simple and inexpensive controlling structure.

DISCLOSURE OF THE INVENTION

According to a first aspect of the present invention, there is provided a working vehicle controlling apparatus in a material conveying system including a command station wherein a material stocked on a material stock yard is conveyed to a hopper by an automatically travellable working vehicle which communicates with the command station, comprising a memory for storing a plurality of fundamental work pattern programs, the fundamental work pattern programs being prepared such that a plurality of different tasks to be done by the working vehicle are divided into a plurality of fundamental work patterns each being not common to others and the divided fundamental work patterns are taken out one by one so as not to be common to the plurality of tasks and the plurality of fundamental work pattern programs respectively corresponding to the plurality of fundamental work patterns; and automatic controlling means for combining the plurality of fundamental work pattern programs in accordance with a work instruction when the work instruction is received from the command station, and for automatically executing a task in accordance with the combined fundamental work pattern programs,

wherein the memory and the automatic controlling means are mounted on the working vehicle.

With such construction achieved according to the present invention, each of various kinds of tasks to be done by the working vehicle is determined depending on a combination made among the fundamental work pattern programs. The fundamental work pattern programs are memorized in the memory one by one. In response to an input of various kinds of operations from the command station, a desired one of the plurality of fundamental work pattern programs is selected to make a combination among the fundamental work pattern programs corresponding to the content of the work instruction, whereby the working vehicle is controlled in accordance with the thus selected program. In this manner, according to the present invention, since tasks to be done by an operator are listed, they are divided until common operations disappear, the fundamental work pattern programs derived from the foregoing division are memorized in the memory, and when a certain operation is executed, a combination is prepared among the fundamental work pattern programs corresponding to the content of the inputted work instruction so that the working vehicle is controlled in accordance with the thus prepared program, an algorithm can stepwise be established for each automatized operation at a high memory efficiency with simplified structure. In addition, when a new operation is to be performed with the working vehicle, the present program can be changed to another one with improved flexibility.

According to a second aspect of the present invention, there is provided a working machine controlling apparatus in a material conveying system including a command station, an automatically travellable working vehicle which communicates with the command station, a material stock yard for stocking a material in the mountain-shaped geometrical configuration and a hopper to which the material is conveyed from the material stock yard, characterizes in that a program for tasks to be done by the working vehicle comprises a main routine which is a program of a whole procedure for tasks to be done by the working machine and a timer interruption routine adapted to be executed by an interruption of a timer at a predetermined time interval for obtaining outputs from various kinds of sensors provided in the working vehicle and driving various kinds of actuators provided in the working vehicle, there are provided a target value buffer for storing a plurality of target values set in accordance with the main routine and a measured value buffer for storing measured value data obtained by the measurements conducted by the timer interruption routine; the main routine executes the whole procedure for tasks to be done by the working vehicle by writing preset values in the target value buffer and reading the measured values from the measured value buffer; and the timer interruption routine individually executes vehicle speed control, working tools (boom and bucket) positioning control, brake control, speed changing transmission shift control and forward/rearward transmission shift control.

With such construction achieved according to the present invention, the whole rough procedure for tasks to be done by the working vehicle is programmed in accordance with the main routine, while other control items such as vehicle speed control, control for locating the working tools, brake control, control for shifting the speed changing transmission among a plurality of speeds and control for shifting the transmission from forward movement to rearward movement and vice versa are individually executed in accordance with the timer interruption routine.

In this manner, according to the present invention, since the whole rough procedure for tasks to be done by the working vehicle are programmed in accordance with the main routine, while other control items such as vehicle speed control, control for locating the working tools, brake control, control for shifting the transmission among a plurality of speed and control for shifting the transmission from forward movement to rearward movement and vice versa are individually executed in accordance with the timer interruption routine, a calculation load to be borne by a microprocessor can be reduced, and high speed processing can be achieved with the aid of the microprocessor.

According to a third aspect of the present invention, there is provided a working vehicle controlling apparatus in a material conveying system wherein a material scooping operation is automatically executed in a material stock yard where a material is stocked in a mountain-shaped geometrical configuration by an automatically travellable working vehicle which has a boom and a bucket, comprising boom load detecting means for detecting a load exerted on the booms; boom raising start detecting means for determining a boom raising start by detecting the time when an output from the boom load detecting means exceeds a preset value; running distance measuring means for measuring a vehicle running distance from the time when the detection value of the boom load detecting means starts to vary after forward movement of the working vehicle prior to the scooping operation to the time when a detection signal is outputted from the boom raising start detecting means; determining means for determining the adhesiveness and the geometrical configuration of a material to be scooped based on an output from the boom load detecting means when the scooping operation is completed and an output from the running distance measuring means; and controlling means for controlling a preset value for starting of raising up the booms at the time of a subsequent scooping operation or a preset vehicle speed or a scooping operation pattern in accordance with the result of the determination made by the determining means, wherein the determining means and the controlling means are mounted on the working vehicle.

With such construction achieved according to the present invention, when a scooping operation is performed, the adhesiveness of a material to be scooped and the mountain-shaped geometrical configuration of the same are determined based on the vehicle running distance from the time when the load exerted on the booms starts to vary after completion of the forward running of the working vehicle till the time when the booms are practically raised up as well as the load exerted on the booms on completion of the scooping operation. Thus, when a subsequent scooping operation is performed, a set value for starting to raise up the booms or a set value for the vehicle speed or a scooping operation pattern are variably controlled base on the result derived from the foregoing determination. In such manner, according to the present invention, since when a scooping operation is performed, the adhesiveness of a material to be scooped and the mountain-shaped geometrical configuration of the same are determined based on the vehicle running distance from the time when the load exerted on the booms starts to vary after completion of the forward running of the working vehicle till the time when the booms are practically raised up as well as the load exerted on the booms on completion of the scooping operation so that when a subsequent scooping operation is performed, a set value for starting to raise up the booms or a set value for the vehicle sped or a scooping operation pattern are variably controlled depending on the result derived from the foregoing determination, a rate of fully filling a bucket with a material can be improved irrespective of the kind of material to be scooped.

According to a fourth aspect of the present invention, there is provided a working vehicle controlling apparatus in a material conveying system wherein a material placed on a material stock yard is conveyed to a hopper by an automatically travellable working vehicle, and a material piling operation is automatically executed in the material stock yard by the working vehicle to build the material in a mountain-shaped configuration, comprising operation start position detecting means for detecting an operation start station placed on the material stock yard; boom load detecting means for detecting a load exerted on a boom of the working vehicle; first controlling means for starting forward running of the working vehicle while the boom and a bucket are in lowered positions when a detection signal is outputted from the operation start position detecting means; second controlling means for starting raising and tilting of the boom and the bucket after completion of the forward running of the working vehicle when an output from the boom load detecting means exceeds a preset value to start raising of the boom so as to raise and tilt the boom and the bucket to preset target angles; third controlling means for stopping the movement of the boom and the bucket when the boom and the bucket reach the target angles, and stopping the forward running of the working vehicle; fourth controlling means for raising the boom to a preset final raising position after the running of the working vehicle is stopped, and stopping the movement of the boom; and fifth controlling means for allowing the working vehicle to run in the forward direction at a predetermined distance when the movement of the booms is stopped at the final raising position, and thereafter stopping the running of the working vehicle and dumping the scooped material by actuating the bucket to a dumping position, wherein the operation start position detecting means, the boom load detecting means and the first through fifth controlling means are mounted on the working vehicle so as to achieve the piling operation with the working vehicle.

With such construction achieved according to the present invention, since piling operation is performed by combining a material scooping operation with a material dumping operation, a fully automatic piling operation can be achieved with simple controlling structure with the aid of the working vehicle. Alternatively, the working vehicle may execute the piling operation by way of steps of detecting that the hopper is fully filled with the material and detecting that a dump truck enters the material conveying system and then leaves the same.

According to a fifth aspect of the present invention, there is provided a working vehicle controlling apparatus in a material conveying system wherein a material stocked in a material stock yard is conveyed to a hopper by an automatically travellable working vehicle, and an arching preventive operation is automatically executed by the working vehicle so as to eliminate an arched state in the hopper with the working vehicle, comprising operation start position detecting means for detecting an operation start station placed before the hopper; first controlling means for allowing the working vehicle to start forward running while a boom and a bucket are raised to a predetermined height when a detection signal is outputted from the operation start position detecting means; second controlling means for stopping the working vehicle at the position before the hopper after completion of the forward running of the working vehicle, starting raising of the boom and the bucket after the working vehicle stops, and raising and tilting the boom and the bucket to predetermined target positions so as to allow a material in the hopper to be scooped by the bucket; third controlling means for stopping the movement of the boom and the bucket when the boom and the bucket reach the predetermined target positions; and fourth controlling means for allowing the scooped material to be dumped by actuating the bucket, wherein the operation start position detecting means and first through fourth controlling means are mounted on the working vehicle so as to achieve an arching preventive operation with the working vehicle.

With such construction achieved according to the present invention, the arching state can be eliminated by scooping the material in the hopper with the bucket and then dumping the scooped material in the hopper again.

According to a sixth aspect of the present invention, there is provided a working vehicle controlling apparatus in a material conveying system wherein a material stocked in a material stock yard is conveyed to a hopper by an automatically travellable working vehicle, and an arching preventive operation is automatically executed by the working vehicle so as to eliminate the arching state in the hopper with the working vehicle, comprising first controlling means for moving the working vehicle to a position before the hopper while a boom and a bucket are raised to a first position higher than the hopper;
second controlling means for tilting the bucket from the first position to a predetermined second position where the material is dumped in the hopper; and third controlling means for tilting the bucket from the second position to the first position,
wherein the first through third controlling means are mounted on the working vehicle so as to execute the arching preventive operation with the working vehicle.

With this construction, the arching state can be eliminated by performing a tilting operation and a dumping operation or repeatedly performing both the operations. Alternatively, the arching preventive operation may be executed by way of steps of detecting that the material falls from the hopper for a period of time longer than a predetermined time and detecting that a quantity of material received in the hopper hardly varies on the assumption that this is recognized as an arching state.

In such a manner, according to the present invention, since the working vehicle is controllably driven in accordance with an automatic program for driving the working vehicle for the purpose of preventing appearance of the arching state by combination of an operation for scooping the material in the hopper with the working vehicle with an operation for dumping the scooped material in the hopper or in accordance with an automatic program for driving the working vehicle for the purpose of preventing appearance of the arched state by combination of a bucket tilting operation with a bucket dumping operation or by repetition of both the operations, a fully automatized arching preventive operation can be achieved with simple and inexpensive controlling structure without any possibility that an operator is exposed to danger during the arching preventive operation.

According to a seventh aspect of the present invention, there is provided a working vehicle controlling apparatus in a material conveying system wherein a material stocked in a roofed or unroofed material stock is conveyed to a hopper by an automatically travellable working vehicle, a dry material stored at the upper part of the material stocked in the roofed material stock yard is conveyed to the hopper by the working vehicle, and a moist material stored at the lower part of the material stocked in the roofed material stock yard is conveyed to the unroofed material stock yard by the working vehicle so as to automatically execute a transverse conveying operation in order to dry the moist material in the unroofed material stock yard, comprising height setting means for setting a height of the boundary between the dry material stored at the upper part of the material and the moist material stored at the lower part of the material stocked in the roofed material stock yard; length setting means for setting a final scooping length for a bucket to scoop the dry material stored at the upper part of the material stocked in the roofed material stock yard; running distance measuring means for measuring a running distance when the working vehicle performs a scooping operation with the bucket; first controlling means for bringing the bucket to a height set by the height setting means so as to load the bucket with the dry material in the roofed material stock yard by executing a scooping operation with the working vehicle; accumulating means for accumulating an output from the running distance measuring means every time the scooping operation is achieved; second controlling means for allowing the working vehicle to run to the hopper after the dry material is loaded in the bucket with the aid of the first controlling means in order to dump the dry material in the hopper; third controlling means for repeatedly executing scooping operation in the roofed material stock yard and material dumping operations in the hopper with the aid of the first controlling means and the second controlling means until an output from the accumulating means exceeds a set value set by the scooping length setting means; fourth controlling means for executing a scooping operation for the moist material stocked in the roofed material stock yard while the bottom surface of the bucket is brought in contact with the ground surface when the output from the accumulating means exceeds the set value set by the scooping length setting means; and fifth controlling means for allowing the working vehicle to run to the unroofed material stock yard after completion of the material loading operation with the aid of the fourth controlling means in order to dump the moist material stocked in the unroofed material stock yard, wherein the height setting means, the length setting means, the running distance measuring means, the accumulating means and the first through fifth controlling means are mounted on the working vehicle so as to achieve the transverse conveying operation with the working vehicle.

With such construction achieved according to the present invention, an operation for conveying the dry material stored at the upper part of the material placed on the roofed material stock yard to the hopper is repeated plural times, and the number of repetitions of the foregoing operation is determined in the following manner. Specifically, the running distance of the working vehicle is measured while the working vehicle practically executes a dry material conveying operation, and it is accumulated in the accumulating means every time the working vehicle executes a scooping operation. The dry material conveying operation is repeatedly executed by the working vehicle until the accumulated value exceeds a preset value, and when the accumulated value exceeds the preset value, a next operation, i.e., an operation for conveying the moist material stored at the lower part of the material placed on the roofed material stock yard to the unroofed material stock yard is executed so as to dry the moist material. Alternatively, the drying operation may be executed such that the number of repetitions is preset and the moist material conveying operation is repeatedly executed until the number of conveying operations reaches the foregoing preset value. In such manner, according to the present invention, a fully automatic transverse conveying operation can be achieved with simple controlling structure.

BRIEF DESCRIPTION OF THE DRAWINGS

Fig. 1 is an illustrative view which shows by way of example the whole structure of a working vehicle controlling apparatus in a material conveying system constructed according to an embodiment of the present invention, Fig. 2 is a block diagram which shows by way of example the inner structure of a working vehicle, Fig. 3 is a perspective view of a hopper and associated components, Fig. 4 is a block diagram which shows by way of example the structure of an operation program, Fig. 5 is a flowchart which shows by way of example controlling tasks to be done by a command station, Fig. 6 is a flowchart which shows by way of example a main operation to be performed by the working vehicle, Fig. 7 is a flowchart which shows by way of example a loading operation to be performed in a shed, Fig. 8 is a flowchart which shows by way of example an unloading operation to be performed in the shed, Fig. 9 is a flowchart which shows by way of example an unloading operation to be performed at a hopper, Fig. 10 is a flowchart which shows by way of example an arching preventive operation, Fig. 11 is a flowchart which shows by way of example a piling operation, Fig. 12 is a flowchart which shows by way of example movement of the vehicle from a start point to another start point, Fig. 13 is a flowchart which shows by way of example a product loading operation, Fig. 14 is a flowchart which shows by way of example a product receiving operation, Fig. 15 is an illustrative view which shows a step of piling operation, Fig. 16 is a block diagram which shows by way of example a program incorporated in a microprocessor, Fig. 17 is a flowchart which shows by way of example a controlling operation to be executed in accordance with a main routine for a scooping operation, Fig. 18 is a flowchart which shows by way of example an operation for controlling a vehicle speed, Fig. 19 is a graph which shows a relationship between deviation of a vehicle speed and a voltage command value, Fig. 20 is a flowchart which shows by way of example a controlling operation for locating a boom, Fig. 21 is a graph which shows a relationship between deviation of a boom position and a voltage command value, Fig. 22 is a flowchart which shows by way of example a controlling operation for locating a bucket, Fig. 23 is a graph which shows a relationship between deviation of a bucket position and a voltage command value, Fig. 24 is a flowchart which shows by way of example an operation for controlling a brake, Fig. 25 is an illustrative view which shows a step of piling operation, Fig. 26 is a flowchart which shows by way of example a controlling operation to be performed in accordance with the main routine for a piling operation, Fig. 27 is a graph which shows a relationship between deviation of a bucket position and a voltage command value, Fig. 28 is a graph which shows a relationship between deviation of a bucket position and a voltage command value, Fig. 29 is an illustrative view which shows by way of example the whole structure of another system for controlling an arching preventive operation, Fig. 30 is an illustrative view which shows a step of controlling an arching preventive operation by employing a first process, Fig. 31 is a flowchart which shows by way of example a controlling operation to be performed in accordance with a main routine by employing the first process for controlling an arching preventive operation, Fig. 32 is an illustrative view which shows a step of controlling an arching second preventive operation by employing a second process, Fig. 33 is a flowchart which shows by way of example a controlling operation to be performed in accordance with a main routine by employing the second process for controlling an arching preventive operation, Fig. 34 is an illustrative view which shows by way of example the whole structure of another system for a transverse conveying operation, Fig. 35 is a flowchart which shows by way of example a controlling operation to be performed in accordance with the main routine for a transverse conveying operation, Fig. 36 is a flowchart which shows by way of example a controlling operation to be performed in accordance with the main routine for a transverse conveying operation, Fig. 37 is an illustrative view which shows a step of transverse conveying operations, Fig. 38 is an illustrative view which shows a step of transverse conveying operations, Fig. 39 is an illustrative view which shows a step of performing a transverse conveying operation, Fig, 40 is an illustrative view which shows a step of performing a transverse conveying operation, Fig. 41 is an illustrative view which shows the state of a material during a piling operation, Fig. 42 is an illustrative view which shows an arching state, and Fig. 43 is an illustrative view which shows a conventional arching preventive equipment.

BEST MODE FOR CARRYING OUT THE INVENTION

The present invention will now be described in detail hereinafter with reference to the accompanying drawings which illustrate a preferred embodiment thereof.

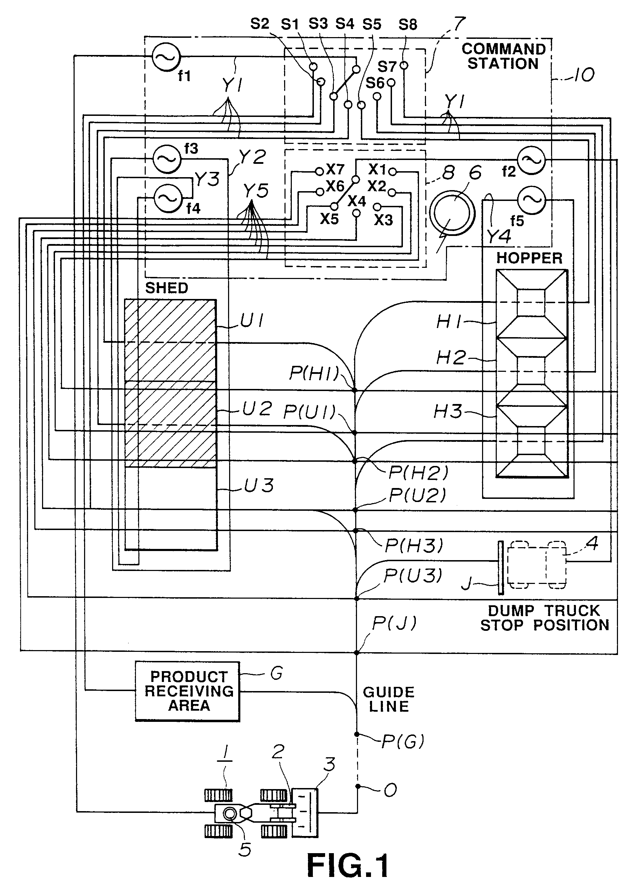

Fig. 1 is an illustrative view which shows the whole structure of a material conveying system constructed according to the embodiment of the present invention. In this embodiment, a wheel loader is employed as a working vehicle 1. The working vehicle 1 includes booms 2 and a bucket 3 as a working machine.

In this system, the different kind of material is stored at each of three material stock yards (shed) U1 to U 3, and the respective materials are conveyed by the wheel loader (hereinafter referred to simply as a vehicle) 1 to hoppers H1 to H3 located at three different positions.

A product receiving area G is a receiving location where an overflowed product (prepared product) obtained in the shown plant is received, and the received product is temporarily stored in a predetermined shed.

A dump truck stop position J serves not only as a temporary stop position where a dump truck 4 which enters the plant for supplying a material to one of the sheds U1 to U3 is temporarily stopped but also as a position where a product temporarily placed in a certain shed is loaded on the dump truck 4.

A radio unit 5 for making radio communication (FM communication) with a command station 10 is mounted on the vehicle 1. A radio unit 6 for making radio communication with the vehicle 1 is installed in the command station 10.

Guide lines for allowing the vehicle 1 to run along predetermined running path and station lines for locating various kinds of stations (original point, escape position, start point, work starting position or the like) are laid on a road surface for allowing the vehicle 1 to run thereon.

A group of guide lines Y1 connected to a running path selecting switch 7 and an alternate current supply source having a frequency f1 are intended to select a running path for the vehicle 1. When a contact S1 of the running path selecting switch 7 is selected, a path extending to a product receiving area G is selected, when a contact S2 is selected, a path extending to the shed U3 is selected, when a contact S3 is selected, a path extending to the shed U2 is selected, when a contact S4 is selected, a path extending to the shed U1 is selected, when a contact S5 is selected, a path extending to a hopper H1 is selected, when a contact S6 is selected, a path extending to a hopper H2 is selected, when a contact S7 is selected, a path extending to a hopper H3 is selected, and when a contact S8 is selected, a path extending to the dump track stop position J is selected.

A station line Y2 connected to an alternative current supply source having a frequency f3 is laid for determining an operation start station on the roofed site side (i.e., an operation start position for a material scooping operation, a material collecting operation, a material dumping operation or the like to be performed in the corresponding shed).

A station line Y3 connected to an alternate current supply source having a frequency f4 is laid for determining a material scooping operation limit station (i.e., a position where the material stored in the corresponding shed disappears, causing execution of a material scooping operation to becomes impossible).

A station line Y4 connected to an alternate current supply source having a frequency f5 is laid for determining an operation start station on the hopper side (i.e., a work start position for a material dumping operation, an arching preventive operation or the like to be performed on the hopper side).

A group of station lines Y5 connected to a start point selecting switch 8 and an alternate current supply source having a frequency f2 are intended to select a start point station. The start point station represents a start point position for allowing the vehicle 1 to start respective operations at the sheds U1 to U3, the hoppers H1 to H3, the product receiving area G and the dump truck stop position J, and the start point position is located on a center line located a little bit before the position where the vehicle 1 turns to move toward respective working facilities (shed, hopper or the like). In detail, a start point P(H1) serves as a start point station for a shed H1, a start point P(U1) serves as a start point station for a hopper U1, a start point P(H2) serves as a start point station for a shed H2, a start point P(H3) serves as a start point station for a shed H3, a start point P(U3) serves as a start point station for a hopper U3, a start point P(J) serves as a start point station for the dump truck stop position J, and a start point P(G) serves as a start point station for the product receiving area G.

When a contact x1 of the start point selecting switch 8 in the command station 10 is selected, the start point station P(H1) is selected, when a contact point x2 is selected, the start point station P(U1) is selected, when a contact x 3 is selected, the start point station P(H2) is selected, when a contact x4 is selected, the start point station P(U2) is selected, when a contact x5 is selected, the start point station P(H3) is selected, when a contact x6 is selected, the start point station P(U3) is selected, and when a contact x7 is selected, the start point station P(J) is selected. Illustration of a structure required for selecting the start point station P(G) is herein neglected.

In addition, an original point station O (i.e., a position where the vehicle 1 is present when the system rises or execution of all operations is completed) can be noted as another station but illustration of a structure required for designating the original point station O is also herein neglected.

An escape station (i.e., a position where the working vehicle escapes when a dump truck 4 enters a certain shed) can be noted in addition to the aforementioned start point stations. In the shown case, any one of these start point stations is substituted for the escape station. Of course, one or a plurality of escape stations each usable exclusively for the foregoing purpose may be arranged.

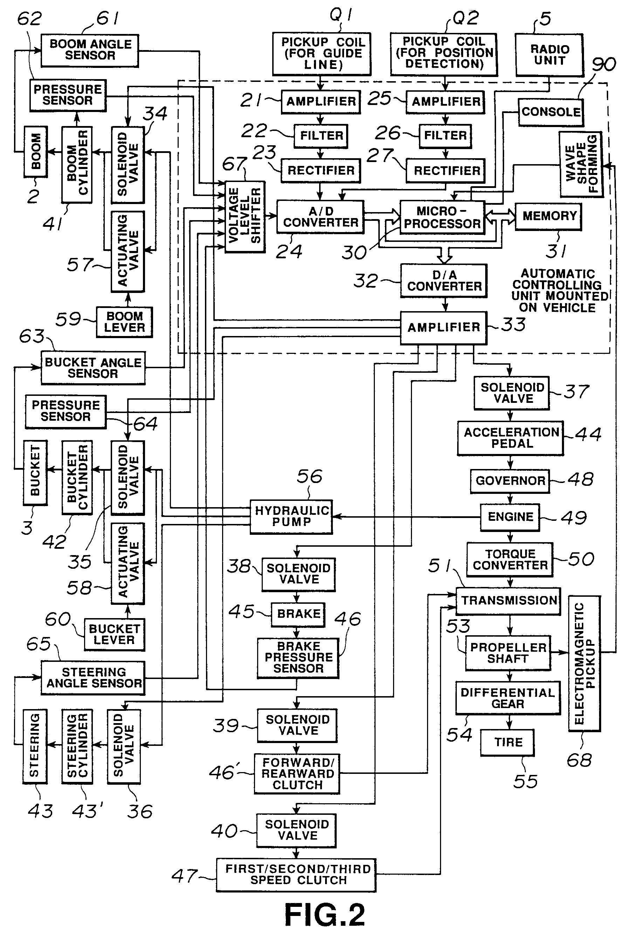

As shown in Fig. 2, the vehicle 1 is equipped with at least a pair of pickup coils Q1 operable for induction and adapted to detect a magnetic field generated from the guide line Y1 laid along a predetermined running path and a pickup coil Q2 operable for position detection and adapted to detect station lines for various kinds of start point stations as mentioned above. Since a detection technology employable for the pickup coils Q1 and Q2 is well known for any expert in the art, detailed description will not be required. A detection output from the pickup coil Q1 is inputted into a microprocessor 30 via an amplifier 21, a filter 22, a rectifying circuit 23 and an A/D converter 24, while a detection output from the pickup coil Q2 is inputted into the microprocessor 30 via an amplifier 25, a filter 26, a rectifying circuit 27 and an A/D converter 24.

The microprocessor 30 determines transverse deviation relative to the foregoing conduction line based on deviation of a detection value (induced voltage) derived from the pair of pickup coils Q1 to control the steering of the vehicle in such a manner as to allow the transverse deviation to disappear, and moreover, detects the position of each start point station by discriminating the frequency corresponding to the detection value derived from the pickup coil Q2.

An automatic controlling unit 20 mounted on the vehicle as shown in Fig. 2 executes control for running of the vehicle, control for communication with the command station, and control for movement of the working tools, etc. A program for executing the foregoing various kinds of control is memorized in a memory 31 electrically connected to the microprocessor 30.

With such construction as shown in Fig. 2, control for a running system and a working tools system for the vehicle 1 is executed in the following manner.

The microprocessor 30 outputs command data to a D/A converter 32.

The D/A converter 32 outputs a command voltage value which in turn is inputted into proportional solenoid valves 34 to 40 via an amplifier 33, whereby a boom cylinder 41 (and the booms 2), a bucket cylinder 42 (and the bucket 3), a steering cylinder 43' (and a steering cylinder 43), an acceleration pedal 44, a brake 45, a forward/rearward movement clutch 46' and a first/second/third speed clutch 47 are driven. Specifically, the microprocessor 30 determines a quantity of actuation of the boom 2, a quantity of actuation of the bucket 3, a quantity of actuation of the acceleration pedal 44, a quantity of actuation of the brake 45, a change position for the forward/rearward movement clutch 46', and a change position for the first/second/third speed clutch 47 based on the command voltage value outputted from the D/A converter 32.

An engine speed of an engine 49 varies by controlling a quantity of injected fuel with the aid of a governor 48 by actuating the acceleration pedal 44.

While the forward/rearward movement clutch 46' is held in the forward movement state or the rearward movement state (other than the neutral state), the power generated by the engine 49 is transmitted to a torque converter 50, a transmission 51, a propeller shaft 53, a differential gear 54 and tires 55 so that the running speed of the vehicle 1 can be changed corresponding to the variation of the engine speed.

The power generated by the engine 49 drives a hydraulic pump 56 of which hydraulic pressure is supplied to the boom cylinders 41, the bucket cylinder 42 and the steering cylinder 43' via the proportional solenoid valves 34, 35 and 36.

An actuating valve 57 is connected to the boom cylinders 41 and an actuating valve 58 is connected to the bucket cylinder 42 so that the booms 2 and the bucket 3 are driven by actuating boom lever 59 and a bucket lever 60 with an operator's hand.

Brake pressure varies depending on a quantity of actuation of the brake pedal 45.

Each boom 2 is equipped with a position sensor 61 for detecting the angular position of the booms 2 and a pressure sensor 62 for detecting the hydraulic pressure in the boom cylinder 41, while the bucket 3 is equipped with a hydraulic pressure sensor 64 for detecting the hydraulic pressure in the bucket cylinder 42. In addition, the steering system is equipped with a position sensor 65 for detecting the angular position of the working vehicle. Further, the brake 45 is equipped with a brake pressure sensor 55 for detecting the hydraulic braking pressure in the brake 45. Detected values derived from the foregoing sensors are inputted into the microprocessor 30 via a voltage level shifter 67 and the A/D converter 24.

A propeller shaft is equipped with a speed sensor (electromagnetic pickup) 68 for detecting the running speed of the vehicle 1, and output pulses from the electromagnetic pickup 68 are inputted into the microprocessor 30. The microprocessor 30 calculates a vehicle speed and a running distance by counting the number of output pulses from the electromagnetic pickup 68.

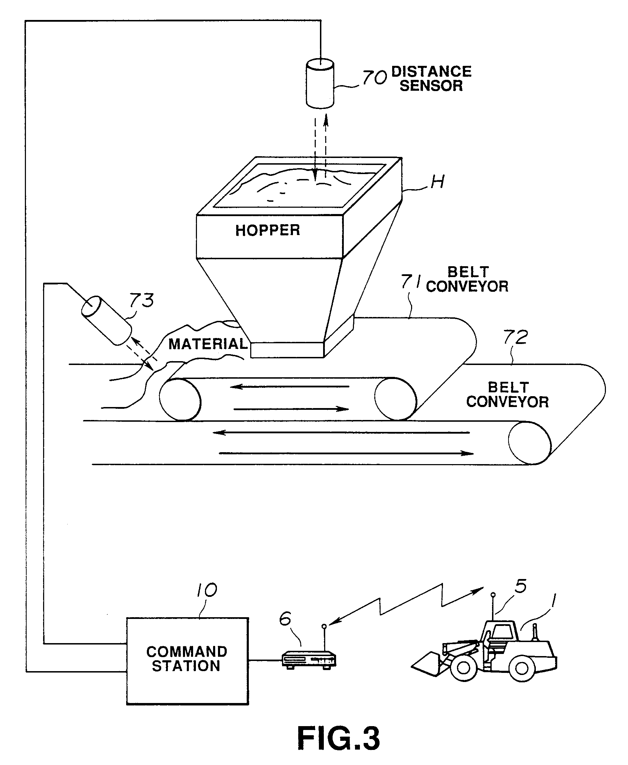

Fig. 3 is an illustrative view which shows by way of perspective view the structure of the hopper H side. A photoelectric type, supersonic type or electric wave type distance sensor 70 for detecting the height of the material stored in each hopper H is disposed above the hopper H. A belt conveyor 71 is arranged below the hopper H, and a lower belt conveyor 72 is arranged below the belt conveyor 71 in operative association of the same. With this construction, the material which falls from the hopper H is conveyed to the preparing plant. A photoelectric type switch 73 is disposed at the position corresponding to the boundary between the upper belt conveyor 71 and the lower belt conveyor 72 so as to detect whether or not a material falls from the hopper H and then flows toward the downstream side. While the material flows in that way, the photoelectric switch 73 is turned on but when no material flows, it is turned off. The photoelectric switch 73 serves to detect whether the material is present or absence. Thus, the present invention should not be limited only to the photoelectric type switch. Alternatively, a supersonic type switch or an electric wave type switch may be substituted for the photoelectric type sensor.

Each hopper is equipped with two sensors 70 and 73 as mentioned above, and an output from each of the sensors 70 and 73 is inputted into the command station 10. In response to an output from the sensor 70, the command station 10 detects a quantity of material stored in each hopper, and in response to outputs from the sensors 70 and 73, it detects whether or not the interior of each hopper is kept in the arching state. Specifically, when the photoelectric switch 73 is continuously turned on for a predetermined time T and when the output from the distance sensor 70 does not vary or a variation rate of the output from the distance sensor 70 does few fluctuate, the command station 10 can detect that the interior of the hopper is kept in the arching state.

With such system construction, operations to be executed by the vehicle 1 are noted in the following.

1. material supplying operation --- The vehicle 1 scoops the material from the shed and dumps it in the hopper.

2. piling operation --- A wheel loader scoops up the material so that the material piled in the shed in the geometrical configuration as shown in Fig. 41 is rebuilt in another geometrical configuration which makes it easy for the wheel loader to scoop the material.

3. arching preventive operation --- The material held at the upper part of the hopper in the arching state is vibratively displaced by operating the vehicle 1 or it is scooped in the bucket of the vehicle 1 so that the material is caused to fall down on the belt conveyor without fail.

4. transverse conveying operation --- The shed is usually covered with a roof but the lower part of the material in the shed is wetted with moisture after it rains. In sunshine days, the vehicle 1 scoops the material stored at the upper part of a material placed on the shed containing few moisture and then dumps it in the hopper but the remaining material wetted with moisture at the lower part of the material placed on the shed is scooped and conveyed to a unroofed shed so as to allow it to be exposed to sunlight until it is dried.

5. escaping operation --- When the dump truck 6 enters the shed while a material is loaded thereon, the vehicle 1 moves to an escape location.

6. product outfeed operation --- A product temporarily stored in the shed is loaded on the dump truck which reaches to dump truck stop position J.

7. temporary product infeed operation --- The product is received in the product receiving area G so that it is temporarily stored in the shed.

When the aforementioned operations are divided into (primitive) operation patterns each usable as a basic pattern without any common part to other operations, they are divided into eight primitive operation patterns a to h as noted below. In other words, each of the operations as mentioned in the paragraphs 1 to 7 is performed in the form of a combination made among the following eight primitive operation patterns.

  a. loading operation in the shed (scooping operation) ---The material is scooped on the shed side.

  b. unloading operation in the shed --- The material is unloaded on the shed side.

  c. unloading operation at the hopper --- The material is unloaded on the hopper side.

  d. arching preventive operation --- An arching preventive operation is performed on the hopper side.

  e. piling operation --- A piling operation is performed on the shed side.

  f. movement of vehicle 1 between start points --- The vehicle 1 moves from a start point station to other start point station.

  g. product loading operation --- The product temporarily stored in the shed is loaded on the dump truck which reaches the dump truck stop position J.

  h. product receiving operation --- The product is received in the product receiving area G.

  Programs for executing the eight primitive operation patterns as mentioned above are memorized in the memory 31 of the automatic controlling unit mounted on the vehicle 1.

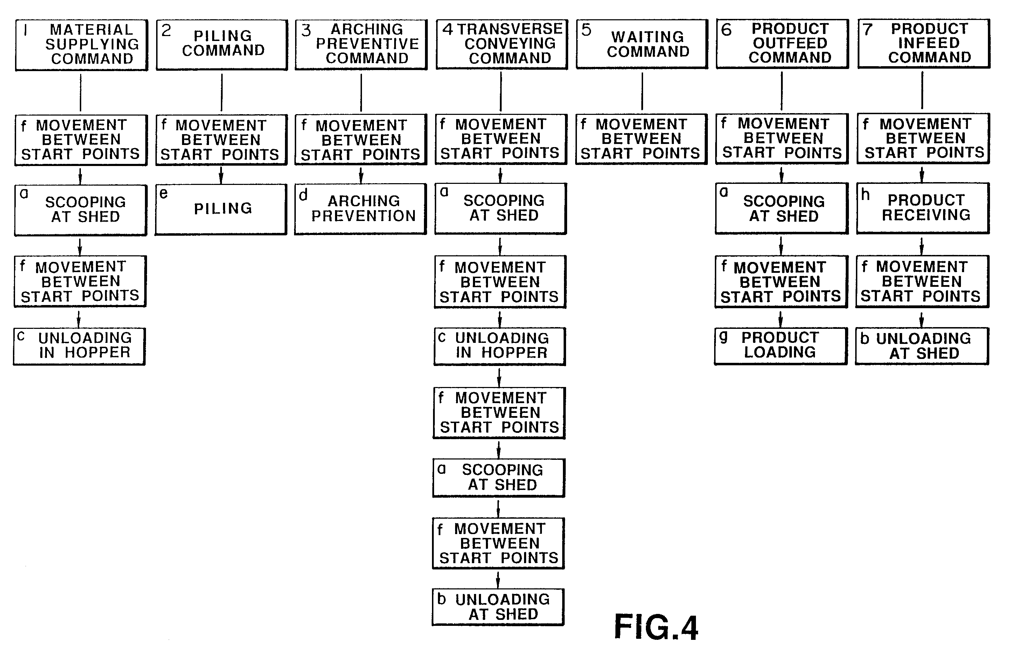

  Once the programs corresponding to the eight primitive operation patterns are prepared in the vehicle 1, all the operations as explained in the aforementioned paragraphs 1 to 7 can be executed by combining the eight primitive patterns with each other in the following manner. In this connection, combination patterns are shown in Fig. 4.

  1. material supplying command = movement of the vehicle 1 from a start point to another start point as explained in the paragraph f → loading of the material in the shed (scooping operation) as explained in the paragraph a → movement of the vehicle 1 from a start point to another start point as explained in the paragraph f → unloading of the material into the hopper as explained in the paragraph c

2. piling operation = movement of the vehicle 1 from a start point to another start point as explained in the paragraph f → piling operation as explained in the paragraph e

3. arching preventive operation = movement of the vehicle 1 from a start point to another start point as explained in the paragraph f → arching preventive operation as explained in the paragraph d

4. transverse conveying operation = movement of the vehicle 1 from a start point to another start point as explained in the paragraph f → loading of the material in the shed (shed covered with a roof) as explained in the paragraph a → movement of the vehicle 1 from a start point to another start point as explained in the paragraph f → unloading operation at the shed (unroofed shed) as explained in the paragraph b

5. escape command = movement of the vehicle 1 from a start point to another start point

6. product outfeed command = movement of the vehicle 1 from a start point to another start point as explained in the paragraph f → loading operation at the shed as explained in the paragraph a → movement of the vehicle 1 from the start point to another start point as explained in the paragraph f → product loading operation as explained in the paragraph g

7. product infeed command = movement of the vehicle 1 from a start point to another start point as explained in the paragraph f → product receiving operation as explained in the paragraph h → movement of the vehicle 1 from the start point to another start point as explained in the paragraph f → unloading operation at the shed as explained in the paragraph b

  In this case, a combination among the primitive operation patterns is memorized in the command station 10 for each of the aforementioned tasks to be done, and moreover, a combination among the primitive operation patterns and a program for the respective primitive operation patterns are memorized on the vehicle 1 side for each of the aforementioned tasks to be done.

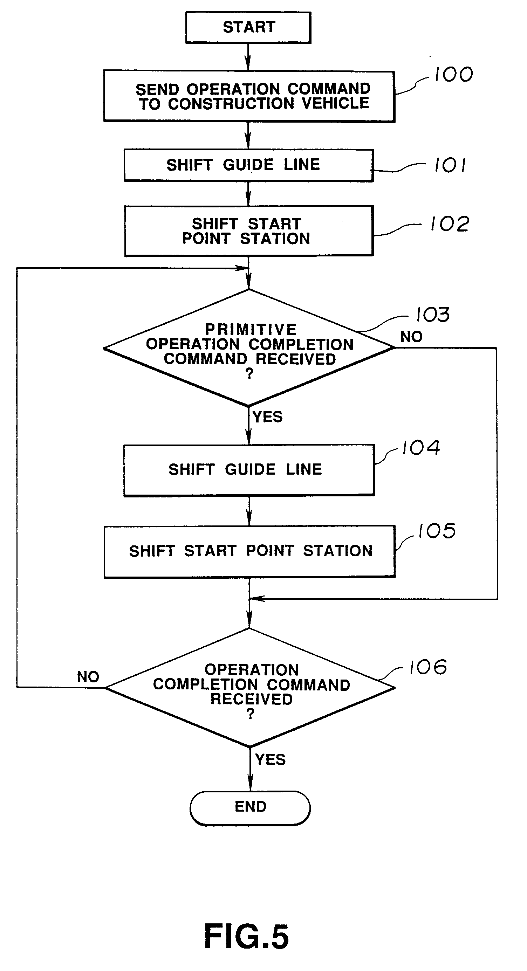

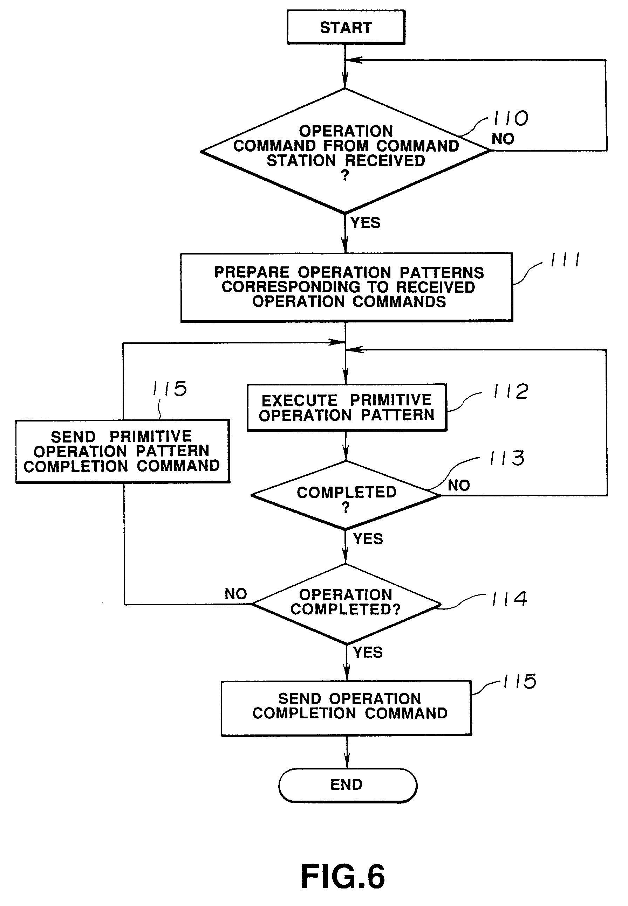

  Fig. 5 is a flowchart which shows a procedure for tasks to be done by the command station 10 when the vehicle 1 executes the operations as explained in the aforementioned paragraphs 1 to 7, and Fig. 6 is a flowchart which shows a procedure for main tasks to be done by the vehicle 1 side when the vehicle 1 executes the operations as explained in the aforementioned paragraphs 1 to 7. An outline of each of the foregoing procedures for operations to be executed by the vehicle 1 will be described below with reference to the flowcharts shown in Fig. 5 and Fig. 6.

First, the command station 10 issues commands to the vehicle 1 corresponding to the operations to be executed by the vehicle 1 as explained in the paragraphs 1 to 7 (step 100 in Fig. 5), and the command station 10 selects a running path for the vehicle 1 by shifting a guide line shift switch 7 to a contact corresponding to a predetermined installation to select a guide line Y1 (step 101). At the same time, a start point selecting switch 8 is shifted to a start point corresponding to the foregoing predetermined installation to shift a start point station to another one (step 102).

When the microprocessor 30 mounted on the vehicle 1 receives a work instruction from the command station 10 (step 110 in Fig. 6), first, it selects a combination among the primitive operation patterns a to h corresponding to the received command on the operations as explained in the paragraphs 1 to 7, and thereafter, it reads from a memory 31 the program for the primitive operation patterns contained in the selected combination to prepare the primitive operation patterns with each other in accordance with a predetermined order (step 111).

The microprocessor 30 executes a first primitive operation pattern by controlling respective portions on the vehicle 1 (step 112). On completion of the first primitive operation pattern (step 113), the microprocessor 30 confirms whether next primitive operation pattern is present or not (step 114). In case that the respective operations are not still completed, the microprocessor 30 sends to the command station 10 a completion command for the primitive operation patterns (step 115).

When the command station 10 receives the completion command for the primitive operation patterns, it selects a running path for the vehicle 1 again by shifting the guide line shifting switch 7 to a contact corresponding to a predetermined installation having a next primitive operation pattern executed therefor to select the guide line Y1 (step 104), and at the same time, it shifts the present start point station by shifting the start point selecting switch 8 to a contact for a start point corresponding to the foregoing installation having a next primitive operation pattern executed therefor (step 105).

Since a primitive operation pattern to be subsequently executed is recognized on the vehicle 1 side, the vehicle 1 moves to a start point station corresponding to the designated installation in response to shifting of the guide line and the start point station, and thereafter, it executes a next primitive operation pattern at the designated installation (step 112). When a given operation is completed by repeating such processing as mentioned above, the vehicle 1 sends to the command station 10 a command for informing the completion of the given operation (step 116).

On receipt the foregoing operation completion command, the command station 10 recognizes the completion of the operation (step 106).

Incidentally, with the combination among the primitive operation patterns as mentioned above, movement of the vehicle 1 from a start point to another start point as explained in the paragraph f is inserted without fail prior to an operation to be performed in a certain installation. Therefore, according to the procedure for operations shown in Fig. 5 and Fig. 6, on completion of the movement of the vehicle 1 from a start point to another start point, any command for instructing the completion of the movement of the working vehicle from a start point to another start point is not sent from the vehicle 1 but a command for instructing that the primitive operation pattern has been completed is sent to the command station 10 on completion of the primitive operation pattern to be subsequently executed in the installation.

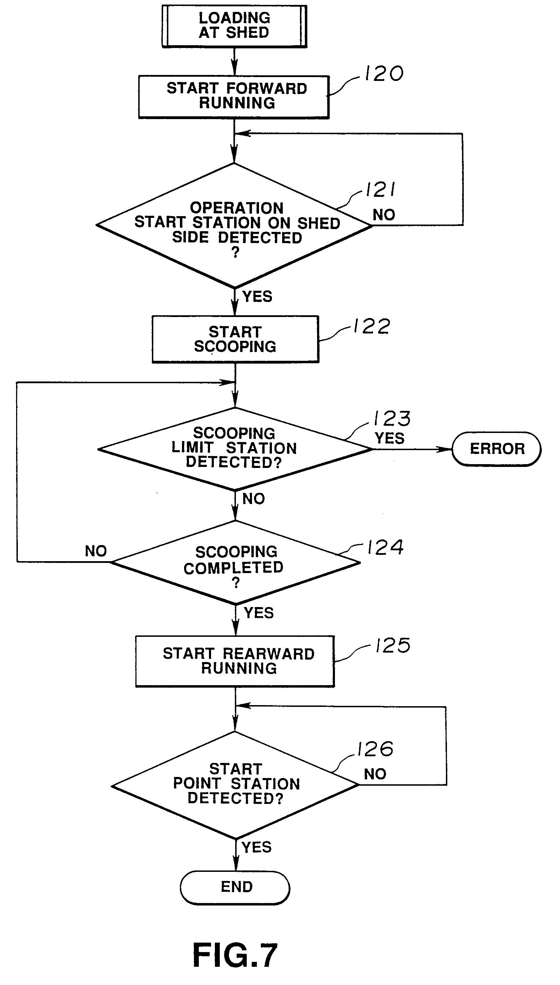

Fig. 7 to Fig. 14 are flowcharts each showing a procedure of tasks to be done by the vehicle 1 according to each of the primitive operation pattern as explained in the paragraphs a to h. As mentioned above, since the primitive operation pattern as explained in the paragraphs a to e and the primitive operation pattern as explained in the paragraphs g and h are achieved without fail after completion of the movement of the vehicle 1 from a start point to another start point, the primitive operation patterns as explained in the paragraphs a to e and the primitive operation pattern as explained in the paragraphs g and h are executed with the corresponding start point in the installation as a start position.

Fig. 7 is a flowchart which shows a loading operation to be performed at the shed (material scooping operation on the shed side) as explained in the paragraph a. First, the vehicle 1 starts forward running from a predetermined station along the corresponding guide line (step 120). Thereafter, when an operation start station on the shed side located on a station line Y2 is detected based on the frequency discrimination (f3) (step 121), a scooping operation is started (step 122). When a scooping limit station Y3 is detected in the course of the scooping operation (step 123), movement of the vehicle 1 is emergently stopped and a predetermined error processing is then executed by informing to the command station 10 that the vehicle 1 is kept stopped. On completion of the scooping operation (step 124), the vehicle 1 runs along the corresponding guide line until it reaches the start point station position where the vehicle 1 starts the scooping operation while it is held in the rearward movement state (steps 125 and 126).

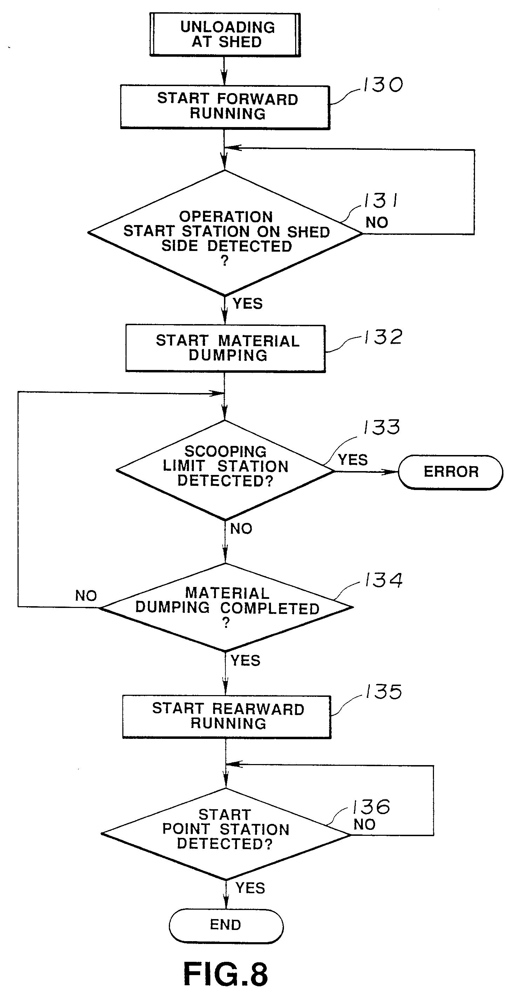

Fig. 8 is a flowchart which shows an unloading operation to be performed at the shed (material dumping operation to be performed on the shed side) as explained in the paragraph b. First, the vehicle 1 starts forward running from a predetermined start point station along the corresponding guide line (step 130). Thereafter, when an operation start station on the shed side located on the station line Y2 is detected based on the discrimination of the frequency (f3) (step 131), the vehicle starts a material dumping operation (step 132). When a scooping limit station Y3 is detected in the course of the material dumping operation (step 133), movement of the vehicle 1 is emergently stopped and a predetermined error processing is then executed by informing to the command station 10 that the vehicle 1 is kept stopped. On completion of the material dumping operation (step 134), the vehicle 1 runs along the corresponding guide line until it reaches the start point station position where the vehicle 1 starts the material dumping operation while it is held in the rearward movement state (steps 135 and 136).

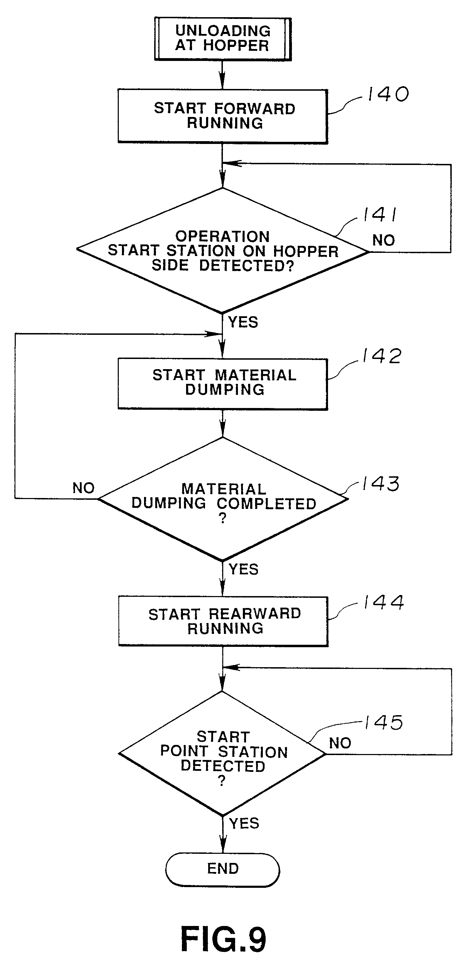

Fig. 9 is a flowchart which shows a hopper unloading operation (material dumping operation to be performed on the hopper side) as explained in the paragraph c. First, the vehicle 1 starts forward running from a predetermined start point station along the corresponding guide line (step 140). Thereafter, when an operation start station on the hopper side located on a station line Y4 based on the frequency discrimination (f5) (step 141), the vehicle 1 starts an operation for dumping material into the hopper (step 142). On completion of the soil dumping operation (step 143), the vehicle 1 runs along the corresponding guide line until it reaches a start point station position where the vehicle 1 starts the material dumping operation while it is held in the rearward movement state (steps 144, 145).

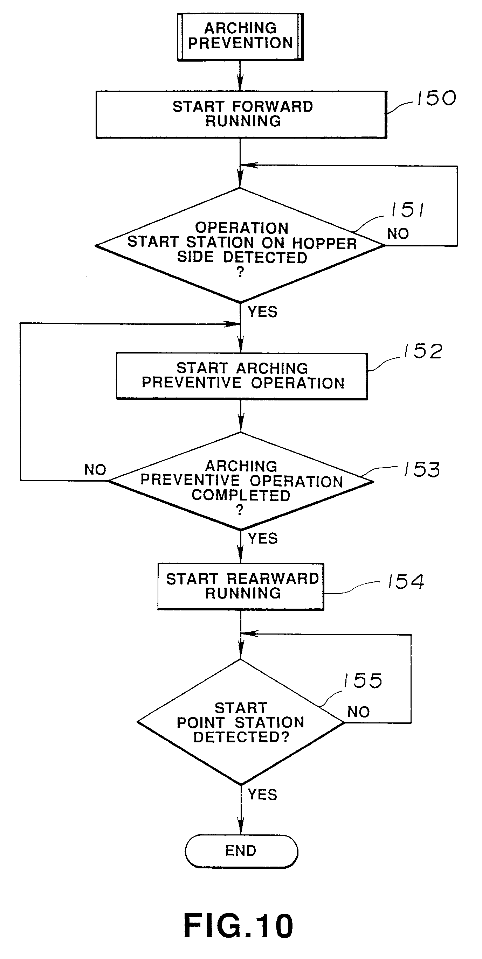

Fig. 10 is a flowchart which shows an arching preventive operation (arching preventive operation to be performed on the hopper side) as explained in the paragraph d. First, the vehicle 1 starts forward running from a predetermined start point station along the corresponding guide line (step 150). Thereafter, when an operation start station on the hopper side located on a station line Y4 is detected based on discrimination of a frequency (f5) (step 151), the vehicle starts a predetermined arching preventive operation for the hopper (step 152). When completion of the arching preventive operation is detected in response to outputs from two sensors 70 and 73 shown in Fig. 3 (step 153), the vehicle 1 runs along the corresponding guide line until it reaches the start point station position where it starts the arching preventive operation while it is held in the rearward movement state (steps 154 and 155).

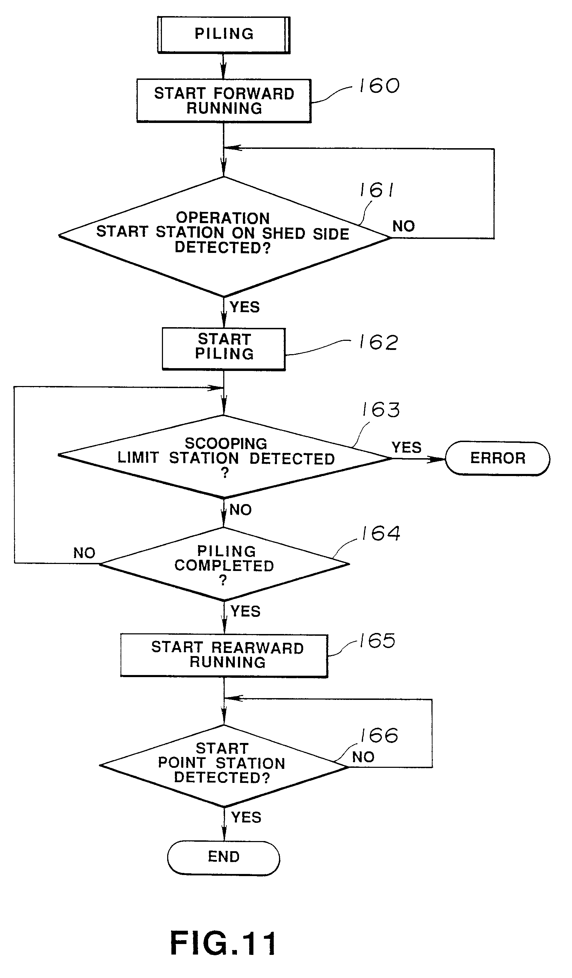

Fig. 11 is a flowchart which shows a piling operation (piling operation to be performed on the shed side) as explained in the paragraph e. First, the vehicle 1 starts forward movement from a predetermined start point station along the corresponding guide line (step 160). Thereafter, when an operation start station on the shed located on the station line Y2 is detected based on the discrimination of the frequency (f3) (step 161), the vehicle 1 starts a predetermined piling operation (step 162). When a scooping limit station Y3 is detected in the course of the piling operation (163), movement of the vehicle 1 is emergently stopped and a predetermined error processing is executed by sending to the command station 10 a signal which informs that the vehicle 1 is kept stopped. On completion of the piling operation (step 164), the vehicle 1 runs along the corresponding guide line until it reaches the start point station position where it starts the piling operation while it is held in the rearward movement state (steps 165 and 166).

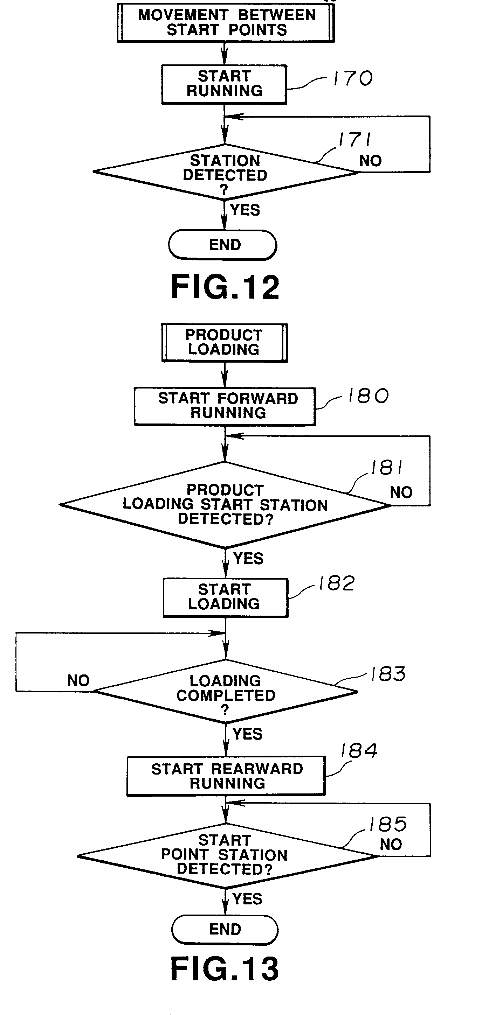

Fig. 12 is a flowchart which shows movement of the vehicle 1 from a start point to another start point (movement of the vehicle 1 from a start point station to another start point station) as explained in the paragraph f. The vehicle 1 runs in the forward direction or in the rearward direction in order to detect a station line along which an alternate current having a frequency f2 flows (step 170). When the station line along which the alternate current having a frequency f2 flows is detected, a processing for detecting the foregoing station line is completed (step 171).

Fig. 13 is a flowchart which shows a product loading operation (a temporarily stored product is loaded on the dump truck which reaches the dump truck stopping position J) as explained in the paragraph g. First, the vehicle 1 starts forward running from a predetermined start point station P(J) along the corresponding guide line (step 180). Thereafter, when a product loading operation start station (not shown in Fig. 1) is detected based on the discrimination of the frequency (step 181), it starts a predetermined loading operation (step 182). When the loading operation is completed (step 183), the vehicle 1 runs along the corresponding guide line until it reaches the start point station position P(J) where it starts the loading operation while it is held in the rearward movement state (steps 184 and 185).

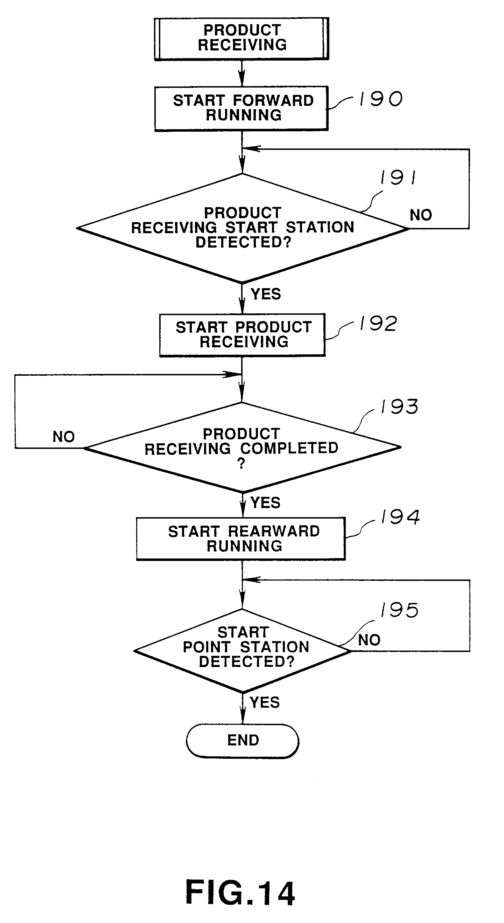

Fig. 14 is a flowchart which shows a product receiving operation (product receiving operation to be performed in the product receiving area G) as explained in the paragraph h. First, the vehicle 1 starts forward running from a predetermined start point station P(G) along the corresponding guide line (step 190). Thereafter, when a product receiving operation start station (not shown in Fig. 1) is detected based on the discrimination of the frequency (step 191), the vehicle 1 starts a predetermined product receiving operation (step 192). On completion of the product receiving operation (step 193), the vehicle 1 runs along the corresponding guide line to reach the start point station P(G) where it starts the product receiving operation while it is held in the rearward movement state (steps 194 and 195).

As is apparent from the above description, the following advantage effects can be obtained by dividing field tasks to be done by the vehicle 1 into the aforementioned primitive operation patterns.

The working vehicle is merely required to prepare a single program corresponding to a plurality of primitive operation patterns. Since the working vehicle is merely required to make a combination among the primitive operation patterns corresponding to a work instruction inputted into the working vehicle when it executes an operation, there does not arise a malfunction that operation programs are repeatedly prepared in the overlapping state. Consequently, an algorithm of the automatic controlling unit can largely be simplified at an improved memory efficiency.

The working vehicle can conduct a variety of field operations by making various combination among the primitive operation patterns.

The working machine is merely required to prepare an operation program by making a combination among the primitive operation patterns already installed in the automatic controlling unit mounted on the working machine with a new additionally installed primitive operation pattern although the number of kinds of field operations increases to some extent. Consequently, variation of the operation program becomes small, enabling the automatic controlling unit to flexibly cope with additional variation.

According to the embodiment of the present invention as mentioned above, the vehicle 1 sends to the command station an information for instructing completion of a certain primitive operation pattern every time each primitive operation pattern is completed. This is because the system shown in Fig. 1 is constructed such that a single frequency f1 is employed for all the guide lines for the running paths, and moreover, a frequency of f2 is employed for all the start point station lines, forcibly causing the command station 10 to change the present running path and start point station line to another ones every time each primitive operation pattern is completed. Thus, when all the frequencies of the guide lines for the running paths as well as all the frequencies of the start point stations are caused to differ from each other and all the frequencies as mentioned above can be discriminated on the vehicle 1 side, there does not arise a necessity that the vehicle 1 sends to the command station an information for showing that a certain primitive operation pattern is completed every time the primitive operation pattern is completed.

In this case, a command to be sent from the command station 10 to the vehicle 1 is not an information for discriminating each work instruction but it is a command for instructing not only that the vehicle 1 moves from what location to what location but also that what operation is to be performed. Thus, the vehicle 1 is merely required to send a completion signal to the command station 10 only when all the operations are completed.

In addition, according to the embodiment of the present invention, a single command corresponding to one of the operations as explained in the paragraphs 1 to 7 is used as a command to be sent from the command station 10 to the vehicle 1. Alternatively, a combination made among the respective primitive operation patterns may be sent to the vehicle 1.

Further, according to the embodiment of the present invention, all the start point stations are caused to differ from each other. Alternatively, a single position may be substituted for all the start point stations. Otherwise, the start point stations and the original point station may be integrated with each other.

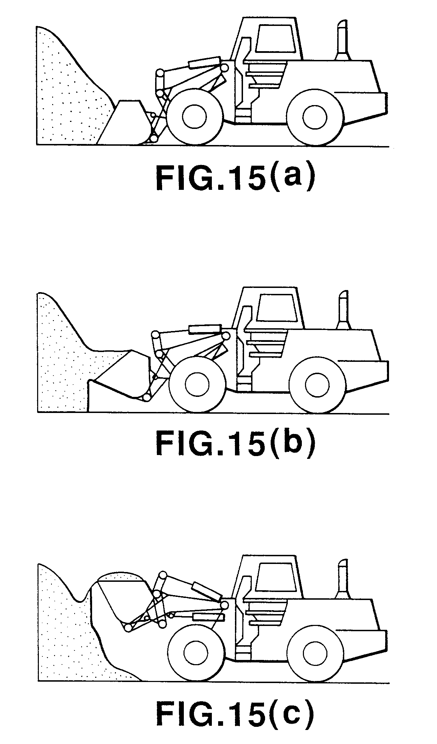

Next, a scooping operation to be performed in the shed or the like will be described in detail below with reference to Fig. 15(a) to Fig. 15(c).

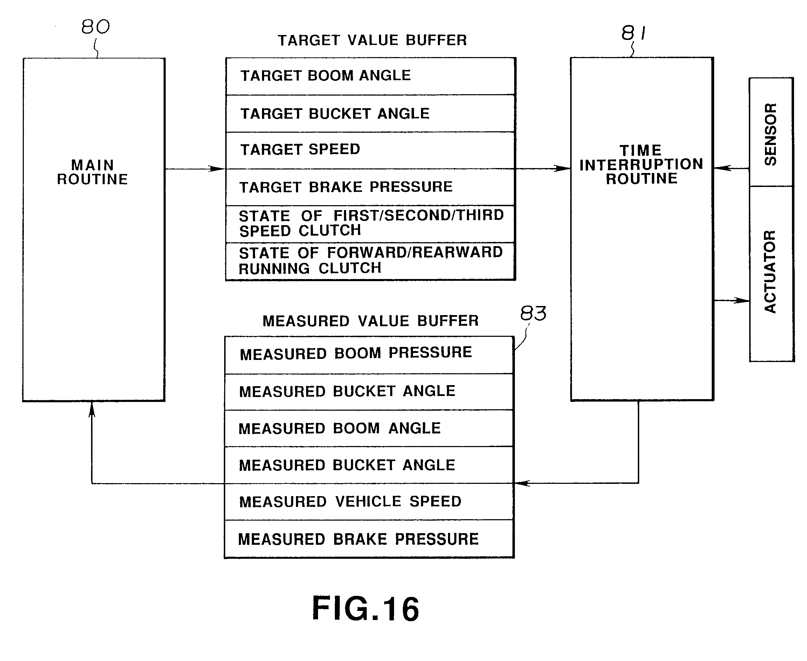

A program for the microprocessor 30 for controlling each scooping operation is constructed as shown in Fig. 16.

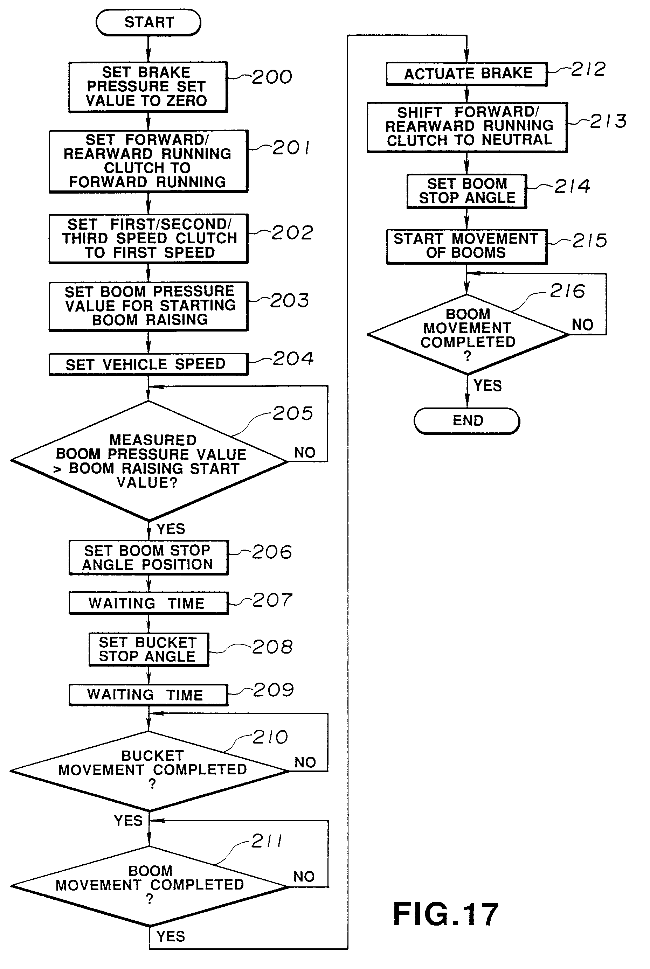

A main routine 80 shown in Fig. 16 is designed to program a main algorithm required for realizing the scooping operation, and a procedure for the scooping operation is shown in Fig. 17. The main routine 80 mainly executes three controls as noted below.

1. control for sequentially writing various kinds of preset values in a target value buffer 82.
2. control for reading data from a measured value buffer 83.
3. control for progressing a control procedure by conducting various kinds of discriminations.

A timer interruption routine 81 is used as a program to be executed at a predetermined time interval. It mainly executes two controls as noted below.

1. control for reading data from various kinds of sensors and then writing the data in the measured value buffer 83.
2. control for reading various kinds of preset values from the target value buffer 82 to drive a predetermined number of actuators in order to execute the following controls.

speed control

control for locating the booms and the bucket

brake control

transmission shift control among first speed, second speed and third speed

transmission shift control from forward running to rearward running and vice versa

A target angle representing each boom position, a target angle representing a bucket position, a target speed, a target state of the transmission among first speed, second speed and third speed, and a target state of a forward/rearward running clutch can be noted as parameters which are set for the target value buffer 82. In addition, a hydraulic pressure for the boom, a hydraulic pressure for the bucket, an angle representing each boom position, an angle representing the bucket position, a speed of the working vehicle and a hydraulic pressure for the brake can be noted as measured values to be written in the measured value buffer 83.

With the program constructed in the above-described manner, a rough procedure for the whole scooping operation to be performed by the working tools is programmed in the main routine 80, and control for the vehicle speed, control for locating the working vehicle, control for the brake, control for shifting the transmission among first speed, second speed and third speed and control for shifting the transmission from forward running to rearward running and vice versa are individually executed in accordance with the timer interruption routine 81 to be executed at a predetermined time interval on the timer interruption basis.

Prior to description on operations to be executed in accordance with the main routine 80 shown in Fig. 17, speed control, control for locating the booms and the bucket, brake control, control for shifting the transmission among first speed, second speed and third speed and control for shifting the transmission from forward running to rearward running and vice versa will be described below.

speed control

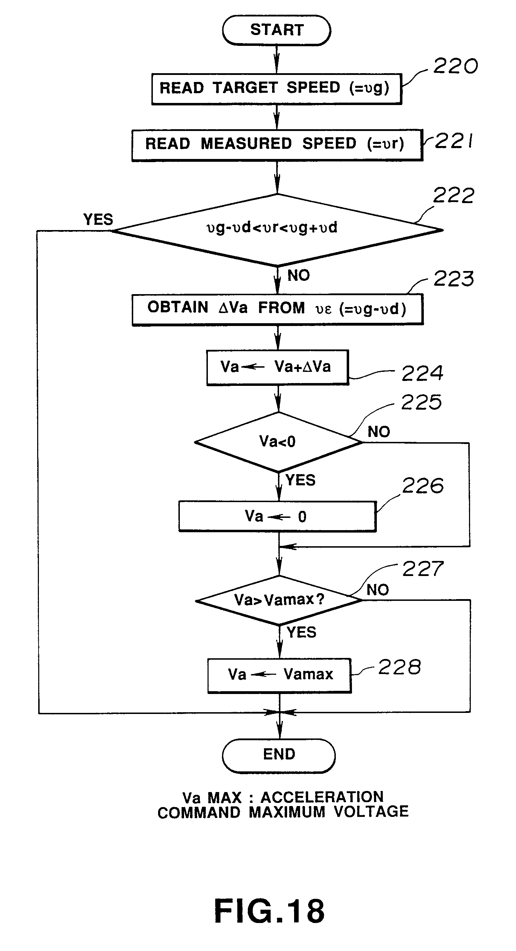

Fig. 18 is a flowchart which shows a procedure for tasks to be done for controlling a vehicle speed in accordance with the timer interruption routine 80.

With respect to the speed control, the microprocessor 30 control an acceleration pedal 44 until a relationship represented by the following inequalities is satisfactorily established among a preset speed $\nu g$ preset by the main routine, a speed insensitive zone width $\nu d$ and a measured vehicle speed $\nu r$ determined based on an output from a vehicle sensor 68.

$$\nu g - \nu d < \nu r < \nu g + \nu d \qquad (1)$$

Specifically, first, the target speed $\nu g$ is read from the target value buffer 83 (step 220), and subsequently, the measured vehicle speed $\nu r$ is determined based on the output from the speed sensor 68 (step 221). When it is found that the inequalities (1) are satisfactorily established (step 222), the vehicle speed control is completed.

When it is found that the above inequalities are not satisfactorily established, an increase/decrease value Va for a voltage command is determined based on the speed deviation $\nu \epsilon$ ($= \nu g - \nu r$) (step 223), and the increase/decrease deviation Va is then added to the present acceleration voltage command value Va (step 224) so that the resultant value is outputted as a command value. It should be noted that when the present acceleration voltage command value Va is less than zero as represented an inequality of Va < 0, the foregoing value Va is increased to zero (steps 225 and 226), while when the value Va exceeds a maximum value Vamax, it is reduced to the maximum value Vamax as represented by an equation of Va = Vamax - (steps 227 and 228).

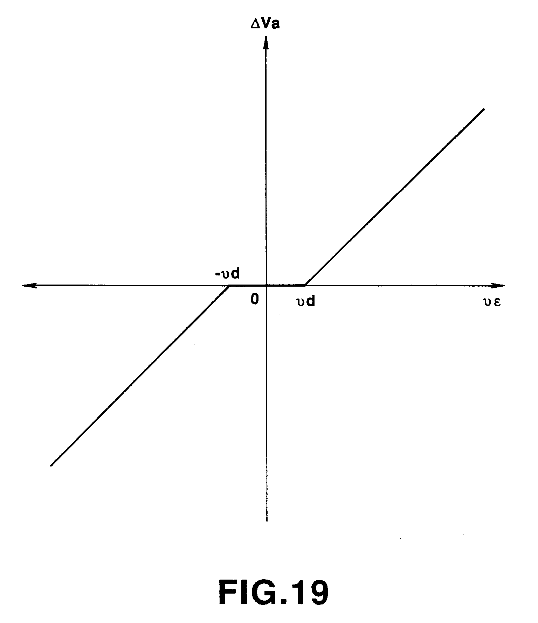

A relationship as represented by Fig. 19 is established between the voltage increase/decrease value Va and the speed deviation $\nu \epsilon$ by achieving the vehicle speed control in the above-described manner.

control for locating the booms

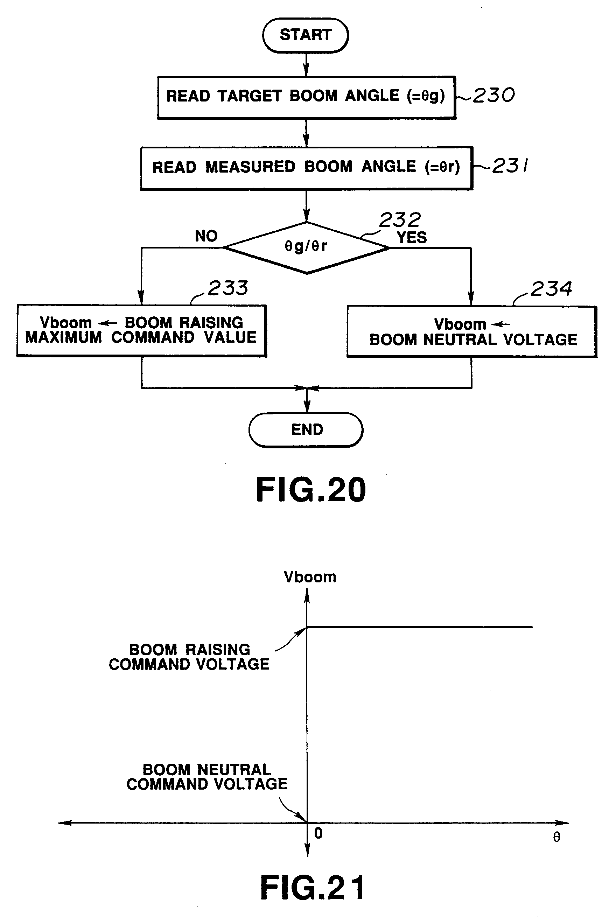

Fig. 20 is a flowchart which shows a procedure for tasks to be done for controlling determination of the boom position in accordance with the timer interruption routine 80.

For the purpose of control for locating the booms, the microprocessor 30 controls a proportional solenoid valve 34 until the following inequality is satisfactorily established between a boom target angle $\theta g$ preset by the main routine 80 and a boom measured angle $\theta r$ determined based on an output from a boom position sensor 61.

$$\theta r > \theta g \qquad (2)$$

Specifically, first, the target angle $\theta g$ is read from the target value buffer 83 (step 230), and subsequently, the measured angle $\theta r$ is determined based on an output from a boom position sensor 61 (step 231). When it is found that the above inequality (2) is satisfactorily established (step 232), a voltage command value Vboom for the boom angle is set to a voltage value corresponding to a boom neutral position (step 234), while when it is found that the inequality (2) is not satisfactorily established, a maximum voltage value (constant) is outputted from the boom position sensor 61 for raising up the boom (step 233). As a result, a relationship as illustrated in Fig. 21 is established between the boom angle voltage command value Vboom and an angular deviation $\theta_\epsilon$ (= $\theta$g - $\theta$r)

control for locating the bucket

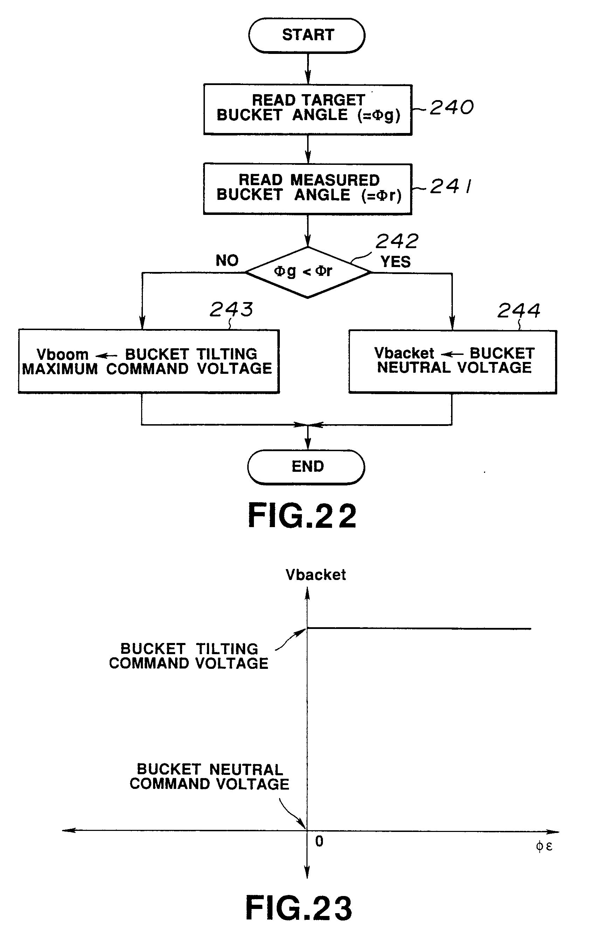

Fig. 22 is a flowchart which shows a procedure for tasks to be done for controlling determination of the bucket position in accordance with the timer interruption routine 81.

For the purpose of controlling the bucket position, the microprocessor 30 controls a proportional solenoid valve 35 until the following inequality is established between a target value $\phi$g preset for the bucket in accordance with the main routine 80 and a measured angle $\phi$r determined for the bucket based on an output from a bucket position sensor 63.

$\phi$r > $\phi$g    (3)

Specifically, first, the target angle $\phi$g is read from the target value buffer 82 (step 240), and subsequently, the measured angle $\phi$r is determined based on an output from a bucket position sensor 63 (step 241). When it is found that the above inequality (3) is satisfactorily established (step 242), a bucket angle voltage command value Vbacket is set to a voltage value corresponding to a neutral position of the bucket (step 244), while when it is found that the inequality (3) is not satisfactorily established, a maximum voltage value (constant) is outputted in order to tilt the bucket (step 243). As a result, a relationship as illustrated in Fig. 23 is established between the bucket angle voltage command value Vbacket and an angular deviation $\phi_\epsilon$ ( = $\phi$g - $\phi$d).

control for the brake

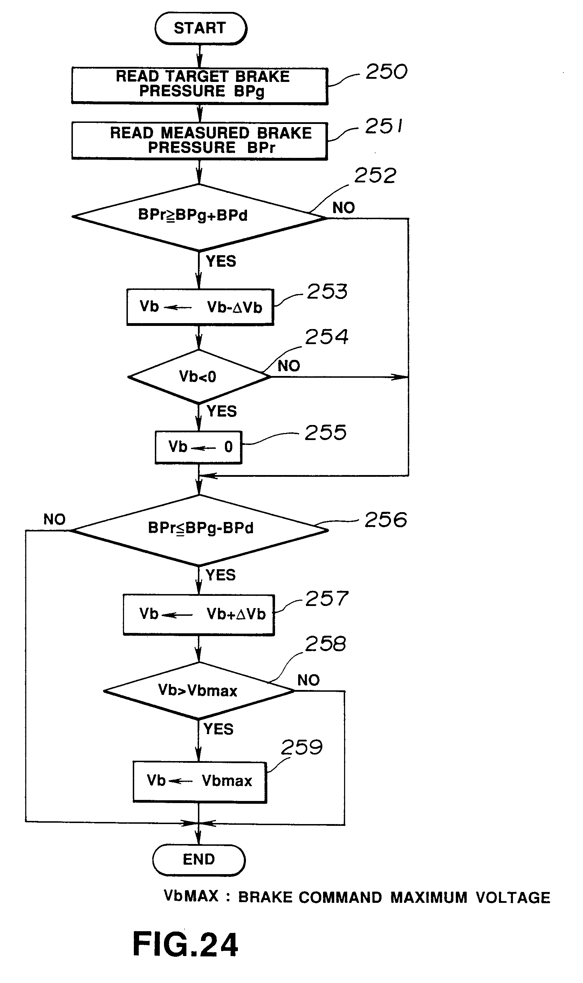

Fig. 24 is a flowchart which shows a procedure for tasks to be done for controlling the brake in accordance with the timer interruption routine 80.

For the purpose of controlling the brake, the microprocessor 30 controls a brake pedal 45 until the following inequalities are established among a target brake pressure value BPg preset by the main routine 80, a brake pressure insensitive zone width BPd and a measured brake pressure BPr determined based on an output from a brake pressure sensor 46.

BPg - BPd < BPr < BPg + BPd    (4)

Specifically, first, the target brake pressure BPg is read from the target value buffer 82 (step 250), and subsequently, the measured brake pressure BPr is determined based on an output from the brake pressure sensor 46 (step 251). When it is found that an inequality of BPr $\geq$ BPg + BPd is established (step 252), a voltage command increase/decrease value Vb corresponding to a brake pressure deviation BP$_\epsilon$ (= BPg - BPr) is subtracted from the present voltage command value Vb (step 253) so as to output it as a command value, while when it is found that an inequality of BPr $\leq$ BPg - BPd is established (step 256), the voltage command increase/decrease value Vb corresponding to the brake pressure deviation BP$_\epsilon$ (= BPg - BPr) is added to the present voltage command value Vb (step 257) so that the resultant value is outputted as a command value. It should be noted that when the voltage command value Vb is less than zero as represented by an inequality of Vb < 0, it is increased to zero (steps 254 and 255), and when it exceeds a maximum value Vmax, it is equalized to Vmax by represented an equation of Vb = Vbmax (steps 258 and 259).

control for shifting the transmission among first speed, second speed and third speed

The present speed of the transmission is shifted to first speed, second speed or third speed by outputting a voltage command to a proportional solenoid valve 40 for a speed clutch 47.

control for shifting the transmission from forward movement to rearward movement and vice versa

The forward/rearward movement clutch 46 is shifted to forward movement, rearward movement or neutral state by outputting a voltage command to a proportional solenoid valve 39.

Next, a procedure for scooping tasks to be done will be described in detail below in accordance with the flowchart which represents the main routine 80 shown in Fig. 17. In connection with the control for scooping operations, when the vehicle is held in the initial state, it is assumed that the bottom surface of the bucket is brought in contact with the ground surface as shown in Fig. 15(a).

(1) step 200 --- A target brake pressure of the target value buffer 82 is set to zero in accordance with the main routine 80. The target brake pressure is incorporated in the timer interruption routine 81, causing the brake to be released from the locked state.

(2) step 201 --- A clutch target state of the forward/rearward clutch operatively associated with the target value buffer 82 is set to forward movement in accordance with the main routine 80. The thus set state is incorporated in the timer interruption routine 81, causing the transmission to be shifted to forward movement.

(3) step 202 --- A target state of a first/second/third speed clutch operatively associated with the target value buffer 82 is set to first speed in accordance with the main routine 80. The thus set state is incorporated in the timer interruption routine 81, causing the transmission to shifted to first speed.

(4) step 203 --- A boom pressure value for boom raising-up start is preset in the microprocessor 30.

(5) step 204 --- A target speed value of the target value buffer 82 is set to a predetermined value in accordance with the main routine 80. The thus set value is incorporated in the timer interruption routine 81, whereby the vehicle 1 starts to run in accordance with the aforementioned speed control. In this case, since the transmission is held in the forward running state, the vehicle 1 runs in the forward direction.

(6) step 205 --- When the vehicle 1 starts to run, the vehicle 1 is caused to plunge in the material sooner or later. A timing relationship for starting a boom raising-up operation is determined at this step. Since a pressure (load exerted on the booms) increases when the vehicle 1 plunges in the material, each boom is caused to start a boom raising-up operation when the measured boom pressure exceeds the pressure set value preset for starting a boom raising-up operation. Specifically, the main routine 80 compares the pressure set value preset for starting a boom raising-up operation with the measured boom pressure value in a measured value buffer 83, and thereafter, when it is found that the measured boom pressure value exceeds the pressure set value for starting a boom raisin-up operation, the procedure is shifted to subsequent boom raising-up control.

(7) step 206 --- To assure that each boom is raised up, it is merely required that a boom target angle position is inputted into the target value buffer 82. As shown in Fig. 15(b), the main routine 80 sets the boom target angular position to a level appreciably higher than that shown in Fig. 15(a) (it is possible to arbitrarily change the foregoing setting), and thereafter, the thus set value is written in the target value buffer 82. This set value is incorporated in the timer interruption routine 81, whereby each boom starts a raising-up operation in accordance with the aforementioned boom locating control. In case that the pressure set value for starting a boom raising-up operation is set to a higher value, there arises an occasion that each boom does not move due to an increased magnitude of load exerted on each boom even though a command for starting a boom raising-up operation is outputted at this step (i.e., the boom target angular position is inputted into the target value buffer 82). However, since the load exerted on the boom is reduced by tilting the bucket in accordance with subsequent control, each boom can be raised up as desired.

(8) step 207 --- This step is coincident with a waiting time that elapses from the time when a command for raising up the booms is issued till the time when a command for tilting the bucket is issued. A predetermined waiting time is set at this step.

(9) step 208 --- Next, the main routine 80 inputs a bucket target angular position into the target value buffer 82 so as to allow the bucket to be tilted. This bucket target angular position is coincident with a tilt end position as shown in Fig. 15(b). This set value is incorporated in the timer interruption routine 81, whereby the bucket starts a tiling operation in accordance with the aforementioned locating control. In this case, since the hydraulic mechanism is constructed such that a large quantity of hydraulic oil is caused to flow in the bucket cylinder with priority, movement of the bucket is started ahead of movement of the booms in spite of the fact that the booms and the bucket are simultaneously driven.

(10) step 209 --- Since the vehicle 1 runs in the forward direction in the course of the bucket tilting operation, a time is reserved to such an extent that the vehicle 1 does not climb up the material during the bucket tilting operation.

(11) step 210 --- This is a step of determining whether movement of the bucket to the tilt end position shown in Fig. 15(b) is completed or not. At this step, the main routine reads the measured bucket angle in the measurement value buffer 83, and when it is found that the measured bucket angle assumes a preset value, movement of the bucket is completed.

(12) step 211 --- This is a step of determining whether movement of the boom to the position shown in Fig. 15(b) is completed or not. At this step, the main routine 80 reads the measured boom angle in the measurement value buffer 83, and when it is found that the measured boom angle assumes a preset value, movement of the boom is once completed.

(13) step 212 --- Running of the vehicle 1 is stopped so as not to allow the vehicle 1 to climb up the material when the movement of the bucket is completed. Specifically, when the main routine 80 detects at the step 210 that the movement of the bucket is completed, a large magnitude of target brake pressure is set in the target value buffer 82. This set value is incorporated in the timer interruption routine 81, whereby a brake controlling operation is started for the purpose of stopping the vehicle 1.

(14) step 213 --- The transmission is shifted to the neutral state so as to allow the vehicle 1 to be stopped. Specifically, the target state of the forward/rearward running clutch operatively associated with the target value buffer 82 is set to the neutral state in accordance with the main routine 80.

(15) steps 214 and 215 --- Next, each boom is raised up to a material conveying position as shown in Fig. 15(c) (it is possible to arbitrarily change the material conveying position). Specifically, the main routine 80 sets the boom target angular position to a predetermined position shown in Fig. 15(c) which in turn is written in the target value buffer 82. This set value is incorporated in the timer interruption routine 81, whereby each boom starts a raising-up operation in accordance with the aforementioned boom locating control.

(16) step 216 --- This is a step of determining whether the booms are displaced to the position shown in Fig. 15(c) or not. The main routine 80 reads the measured boom angle in the measurement value buffer 83, and when it is found that the measured boom angle assumes a preset angle, the displacement of the booms is completed.

The procedure for scooping operations has been described above.

As mentioned above, screening, fine sand, coarse sand, crushed rock and asphalt waste can be noted as typical materials to be scooped by the working vehicle. Among them, the asphalt waste is a material of which particles are not easily disintegrated from each other and of which mountain-shaped geometrical configuration is not easily broken, and each of the other materials rather than the asphalt waste is such that particles are easily disintegrated from each other and the geometrical configuration is easily broken. In this specification, the material of which particles are easily disintegrated from each other and of which geometrical configuration is easily broken represents a material of which particles have low adhesiveness, while the material of which particles are hardly disintegrated from each other and of which geometrical configuration is hardly broken represents a material of which particles have high adhesiveness.

When comparison is made among the foregoing materials in terms of a particle size in accordance with the order of materials each having low adhesiveness, the result derived from the comparison is represented by the following inequalities.

screening < fine sand < coarse sand < crushed rock

It should be noted that the screening and the fine sand exhibit high adhesiveness when each of them contains moisture.

A problem arising when a rate of fully filling a bucket with a material at the time of material scooping operation is to be increased is not concerned with a particle size of each particle in the material but with adhesiveness of the material as well as geometrical configuration of a mountain-shaped material.

Therefore, if the adhesiveness of a material and the geometrical configuration of a mountain-shaped material are determined during each material scooping operation and a scooping operation to be subsequently performed is changed based on an algorithm corresponding to the results from the foregoing determination, it is expected that the rate of fully filling a bucket with the material can be increased, and moreover, a material conveying operation can be achieved at an elevated efficiency.

First, a process of determining the adhesiveness of a material and the geometrical configuration of a mountain-shaped material will be described below.

The value derived from measurement conducted for a boom pressure at the steps 204 and 205 in the flowchart shown in Fig. 17 gradually increases as the bucket plunges in a mountain-shaped material by forward movement of the vehicle 1. Here, a running distance Ls of the vehicle 1 from the time when the boom pressure measured value starts to vary till the time when the results derived from determination at the step 205 is YES (wherein it is assumed that the measured boom pressure value is higher than the boom raising pressure value) is measured. In practice, the running distance Ls of the vehicle 1 can be determined by counting the number of output pulses from the vehicle sensor 68.

In addition, the measured boom pressure value Pe is incorporated in the automatic controlling unit when the procedure for all operations as shown in Fig. 17 is fully completed (after completion of the step 216).

The adhesiveness of a material and the geometrical configuration of a mountain-shaped material can be discriminated based on the Ls value and the Pe value in the following manner.

(a) Ls ; short Pe ; high

In this case, the material exhibits low adhesiveness.

(b) Ls ; short Pe ; low

In this case, the material exhibits high adhesiveness.

(c) Ls ; long Pe ; low

In this case, the geometrical configuration of a mountain-shaped material is broken but the material can easily be scooped with the bucket of the vehicle 1.

(d) Ls ; long Pe ; low

In this case, the geometrical configuration of a mountain-shaped material is broken and kept unstable, resulting in a scooping operation failing to be satisfactorily achieved.

In the case as mentioned above in the paragraphs (a) and (b), the material is hard, while in the case as mentioned above in the paragraphs (c) and (d), the material is soft.

Next, a scooping operation to be subsequently performed as shown in Fig. 17 is changed in the following manner corresponding to the results derived from the foregoing discrimination.

In the case as mentioned in the paragraph (a) ---Nothing is changed.

In the case as mentioned in the paragraph (b) ---

a, The value set for the boom pressure at the time when a boom raising-up operation is started at the step 203 is increased.

b, The value set for the vehicle speed at the step 204 is increased.

c, The movement of the bucket from the step 208 to the step 210 is repeated several times (e.g., three times). In addition, a value set for the bucket stop position angle at the step 208 is adequately changed so as to enable operations represented by tilting → dumping → tilting to be repeatedly performed.

In the case as mentioned in the paragraph (c) ---Nothing is changed.

In the case as mentioned in the paragraph (d) ---

a, The value set for a boom pressure for starting a boom raising-up operation at the step 203 is increased.

b, The value set for a vehicle speed at the step 204 is increased.

Specifically, in the case as mentioned in the paragraph (b), since the geometrical configuration of a mountain-shaped material is hardly broken, the rate of fully filling a boom with a material can be improved by performing a scooping operation after the geometrical configuration of a mountain-shaped material is broken by repeating tilting and dumping operations.

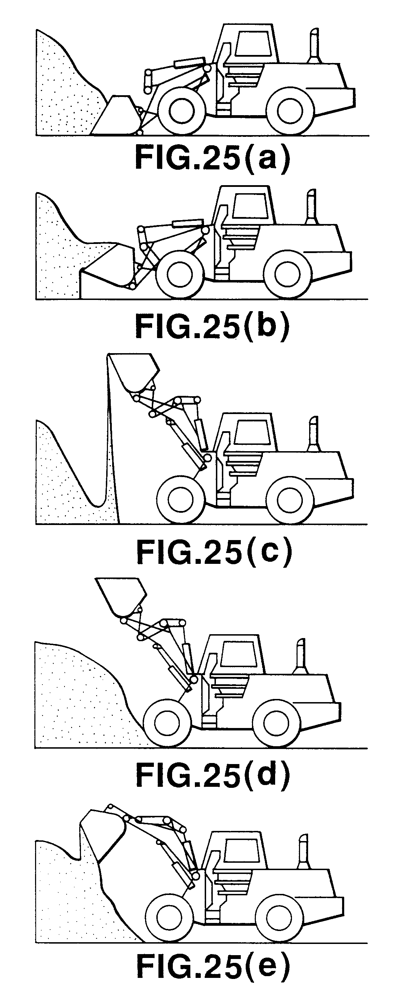

Next, a piling operation to be performed at the shed will be described in detail below. This piling operation is achieved as illustrated in Fig. 25(a) to Fig. 25(e).

As shown in Fig. 41, the piling operation is executed when the vehicle 1 can not satisfactorily scoop a part of the mountain-shaped material at the shed serving as a material storing location. In other words, the piling operation is executed for building a mountain-shaped material after the material is dumped from the dump truck which reaches the shed, so as to enable a part of the mountain-shaped material to be easily scooped with the bucket of the vehicle 1.

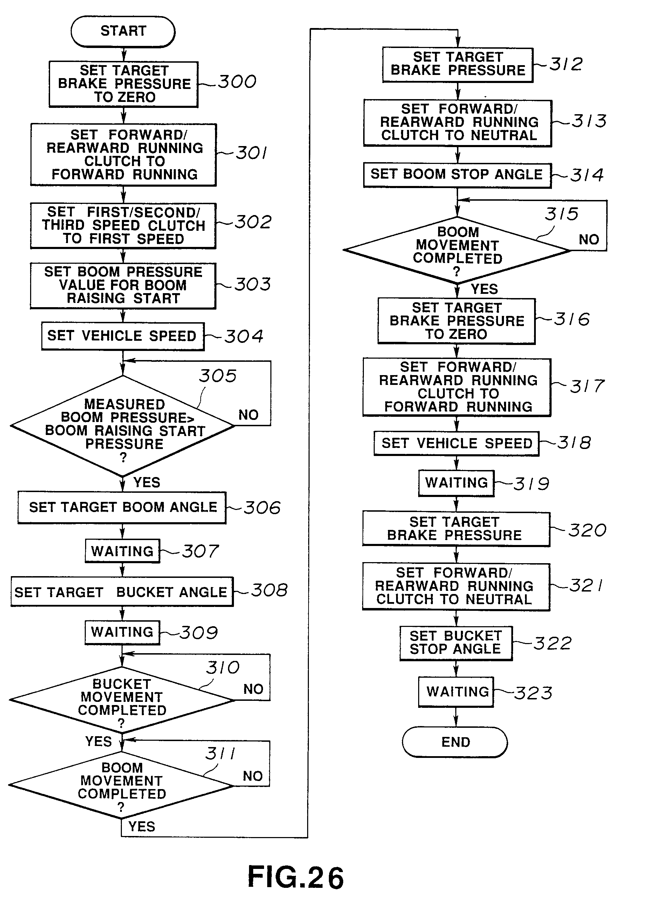

The program structure of the microprocessor 30 required for achieving the piling operation is divided into a main routine 80 and a timer interruption routine 81 as shown in Fig. 16. A procedure for tasks to be done in accordance with the main routine 80 is shown in Fig. 26.

The main routine 80 required for achieving the piling operation executes the following controls in the same manner as that for the scooping operation as mentioned above.

1. control for sequentially writing various kinds of preset values in the target value buffer 82 in accordance with a predetermined order.

2. control for reading data from the measured value buffer 83.

3. control for progressing a control procedure by making various kinds of determinations.

The timer interruption routine 81 required for achieving piling operation is a program which is to be executed at a predetermined time interval in the same manner as the timer interruption routine required for achieving the scooping operation as mentioned, and it mainly executes the following two controls.

1. control for reading data from various kinds of sensors and writing them in the measured value buffer 83.

2. control for reading various kinds of preset values from the target value buffer 82 and executing the following control items by driving a predetermined number of actuators.

speed control

control for locating the booms and the bucket

brake control

control for shifting the transmission among first speed, second speed and third speed

control for shifting the transmission from forward movement to rearward movement and vice versa

Also with the program structure for the piling operation as mentioned above, a rough procedure for the whole piling operation to be achieved by the working vehicle is programmed in the main routine 80, and other controls such as vehicle speed control, control for locating the working tools, brake control, control for shifting the transmission among first speed, second speed and third speed, and control for shifting the transmission from forward movement to rearward movement and vice versa are individually executed in accordance with the timer interruption routine 81 to be executed on the timer interruption basis at a predetermined time interval.

To achieve piling operation, since there is a necessity that the bucket conducts turning movement in two directions, i.e., a tilting direction and a dumping direction and the booms conduct raising and lowering movements, control for locating the booms and the bucket is executed in accordance with the timer interruption routine 81 in the following manner.

control for locating the booms

To conduct the control for locating the booms, a target boom angle $\theta g$ and a boom angle insensitive zone width $\theta d$ are preset, and the microprocessor 30 controls a proportional solenoid valve 34 until a relationship represented by the following inequalities is satisfactorily established among the preset values and a measured boom angle $\theta r$.

$$\theta g - \theta d < \theta r < \theta g + \theta d \qquad (5)$$

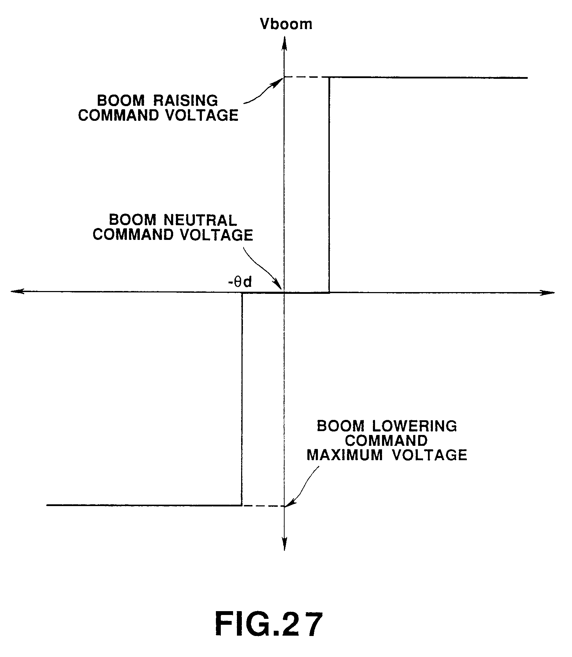

In detail, when the above inequalities are satisfactorily established, the microprocessor 30 assumes a voltage command value Vboom representing a boom angle as a voltage value corresponding to the boom neutral state, while when the inequalities are not satisfactorily established, the microprocessor 30 outputs a maximum voltage value (constant value) for raising and lowering the boom as a voltage command value Vboom. As a result, the relationship between the voltage command value Vboom representing the boom angle and an angular deviation $\theta \epsilon$ (= $\theta g - \theta r$) is illustrated in Fig. 27.

control for locating the bucket

To conduct the control for locating the bucket, a target bucket angle $\phi g$ and a bucket angle insensitive zone width $\phi d$ are preset, and the microprocessor 30 controls a proportional solenoid valve 35 for actuating a bucket cylinder until a relationship represented by the following inequalities is satisfactorily established between the present values and a measured bucket angle $\phi r$.

$$\phi g - \phi d < \phi r < \phi g + \phi d \qquad (6)$$

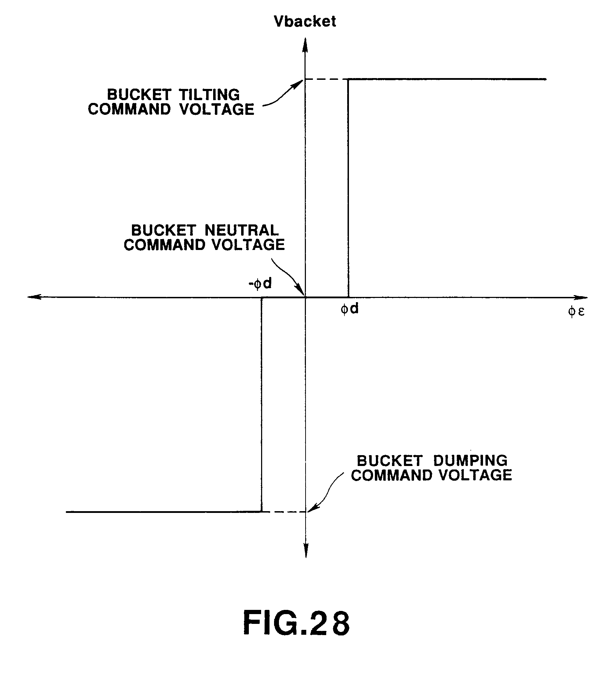

Specifically, when it is found that the inequalities (6) are satisfactorily established, the microprocessor 30 assumes a bucket angle voltage command value Vb as a voltage value corresponding to the bucket neutral state, while when the inequalities (6) are not satisfactorily established, the microprocessor 30 outputs a maximum voltage value (constant value) for raising and lowering the bucket as a voltage command value Vbacket. As a result, the relationship between the bucket angle voltage command value Vbacket and an angular deviation $\phi \epsilon$ (= $\phi g - \phi r$) is as illustrated in Fig. 28.

A process of executing other control items such as speed control and brake control for the piling operation in accordance with the timer interruption routine 81 is same as that shown in Fig. 18 and Fig. 24.

A procedure for piling tasks to be done by the working vehicle will be described below with reference to Fig. 25 and Fig. 26.

Incidentally, to conduct control for the piling operations, it is assumed that the bottom surface of the bucket is brought in contact with the ground surface when the working vehicle is held in the initial state.

(1) step 300 --- A target brake pressure of the target value buffer 82 is set to zero in accordance with the main routine 80. This target brake pressure is incorporated in the timer interruption routine 81, whereby the working vehicle is released from the braked state.

(2) step 301 --- A target state of a forward/rearward movement clutch of the target value buffer 82 is set to forward movement in accordance with the main routine 80. The thus set state is incorporated in the timer interruption routine 81, whereby the transmission is shifted to forward movement.

(3) step 302 --- A target state of a first/second/third speed clutch of the target value buffer 82 is set to a first speed in accordance with the main routine 80.

(4) step 303 --- A boom pressure value for starting a boom raising-up operation is preset in the microprocessor 30.

(5) step 304 --- A target speed of the target value buffer 82 is set to a predetermined value in accordance with the main routine 90. The thus preset value is incorporated in the timer interruption routine 81, whereby the vehicle 1 starts movement in accordance with the aforementioned speed control. In this case, since the transmission is shifted to the forward movement, the vehicle 1 runs in the forward direction.

(6) step 305 --- Although the vehicle 1 plunges in the material sooner or later once it starts to run, it is assumed that the microprocessor 30 determines a timing relationship for starting a boom raising-up operation at this step. Since the pressure exerted on the boom cylinder increases when the vehicle 1 plunges in the material, the booms start a raising-up operation when the measured boom pressure value exceeds the preset pressure set value for starting a boom raising-up operation. Specifically, the main routine 80 compares the preset pressure value preset for starting a boom raising-up operation with the measured boom pressure value in the measured value buffer 83, and when it is found that the relationship represented by an inequality of the measured boom pressure value > the pressure value set for starting a boom raising-up operation is established, the procedure goes to control for a subsequent boom raising-up operation.

(7) step 306 --- To allow the booms to be raised up, it is merely required that a boom target angular position is set in the target value buffer 82. As shown in Fig. 25(b), the main routine 80 sets the boom target angular position to a position appreciably higher than that shown in Fig. 25(b) (it is possible to arbitrarily change the setting), and subsequently, the thus set value is written in the target value buffer 82. This set value is incorporated in the timer interruption routine 81, whereby the booms start a boom raising-up operation in accordance with the aforementioned boom locating control. In case that the pressure value set for starting a boom raising-up operation is set to a larger value, since the load exerted on the booms is enlarged when a boom raising-up operation start command is outputted from the microprocessor 30, there arises an occasion that the boom do not move. However, since the load exerted on the booms is reduced by tilting the bucket in accordance with subsequent control, the booms can perform a raising-up operation.

(8) step 307 --- This step is coincident with a waiting time that elapses from the time when a boom raising-up command is issued till the time when a bucket tilting command is issued. Thus, a predetermined waiting time is set in the microprocessor 30.

(9) step 308 --- Next, to tilt the bucket, the main routine 80 sets a bucket target angular position in the target value bucket 82. The bucket target angular position is coincident with a tilt end position as shown in Fig. 25(b). This set value is incorporated in the timer interruption routine 81, whereby the bucket starts a tilting operation in accordance with aforementioned bucket locating control. In this case, since the hydraulic mechanism is constructed such that a large quantity of hydraulic oil is caused to flow in the bucket cylinder with priority, the movement of the bucket is conducted ahead of the movement of the booms although the boom and the bucket are simultaneously driven.

(10) step 309 --- Since the vehicle 1 moves in the forward direction also in the course of a tilting operation performed by the bucket, a time is reserved to such an extent that the vehicle 1 does not climb up the material during the bucket tiling operation.

(11) step 310 --- This is a step of determining whether the bucket completes movement to the tilt end position shown in Fig. 25(b) or not, and the main routine 80 reads the measured bucket angle in the measured value buffer 83 so that the movement of the bucket is once completed when it is found that the measured bucket angle assumes a predetermined value.

(12) step 311 --- This is a step of determining whether the booms complete movement to the position shown in Fig. 25(b) or not, and the main routine 80 reads the measured boom angle in the measured value buffer 83 so that the movement of the booms is once completed when the measured boom angle assumes a predetermined value.

(13) step 312 --- The running of the vehicle 1 is stopped when the bucket tilting operation is completed, so as not to allow the vehicle 1 to climb up a mountain-shaped material. Specifically, when the main routine 80 detects at the step 310 that the movement of the bucket is completed, a high intensity of target brake pressure is set in the target value buffer 82. The thus set value is incorporated in the timer interruption routine 81, whereby brake control is started for the purpose of stopping the vehicle 1.

(14) step 313 --- The transmission is shifted to the neutral state likewise for the purpose of stopping the vehicle 1. Specifically, the target state of the forward/rearward movement clutch in the target value buffer 82 is set to the neutral state in accordance with the main routine 80. The thus set state is incorporated in the timer interruption routine 81 so as to allow the transmission to be shifted to the neutral state.

(15) step 314 --- Next, each boom is raised up to the material conveying position shown in Fig. 25(c) (it is possible to arbitrarily change the material conveying position). Specifically, the main routine 80 sets the boom target angular position to the predetermined position shown in Fig. 25(c) which in turn is written in the target value buffer 82. This set value is incorporated in the timer interruption routine 81, whereby the boom starts a raising-up operation in accordance with the aforementioned boom locating control.

(16) step 315 --- This is a step of determining whether the booms complete movement to the position shown in Fig. 25(c) or not, and the main routine 80 reads the measured boom angle in the measured value buffer 83 so that the movement of the booms is completed when the measured boom angle assumes a predetermined set value.

(17) step 316 --- The target brake pressure of the target value buffer 82 is set to zero again in accordance with the main routine 80. This target brake pressure is incorporated in the timer interruption routine 81, whereby the brake is released from the locked state again.

(18) step 317 --- The target state of the forward/rearward movement clutch in the target value buffer 82 is set to forward movement again in accordance with the main routine 80. This set state is incorporated in the timer interruption routine 81 so that the transmission is shifted to forward movement.

(19) step 318 --- The target speed of the target value buffer 82 is reset to a predetermined value in accordance with the main routine 80. This reset value is incorporated in the timer interruption routine 81, whereby the vehicle 1 restarts running in accordance with the aforementioned speed control. In this case, since the transmission is shifted to forward movement, the vehicle 1 runs in the forward direction.

(20) step 319 --- A waiting time (set time) is reserved to such an extent that the vehicle 1 can move so as to enable it to slightly climb up a mountain-shaped material after it starts to move in the forward direction, as shown in Fig. 25(d).

(21) step 320 --- When the foregoing waiting time elapses, the main routine 80 sets a high intensity of target brake pressure in the target value buffer 82 in order to stop the movement of the vehicle 1. This set value is incorporated in the timer interruption routine 81, whereby brake control is started for the purpose of stopping the vehicle 1.

(22) step 321 --- The transmission is shifted to the neutral state likewise for the purpose of stopping the vehicle 1. In other words, the target state of the forward/rearward movement in the target value buffer 82 is set to the neutral state in accordance with the main routine 90. This set state is incorporated in the timer interruption routine 81 so that the transmission is shifted to the neutral state.

(23) step 322 --- The main routine 80 sets the bucket target angular position for the purpose of material dumping in the target value buffer 82 in order to dump the material from the bucket as shown in Fig. 25(d). This bucket target angular position is coincident with a position as shown in Fig. 25(d).

(24) step 323 --- The vehicle 1 is held in the waiting state for a certain adequate time until the material is dumped from the bucket.

The procedure for piling operations has been described above.

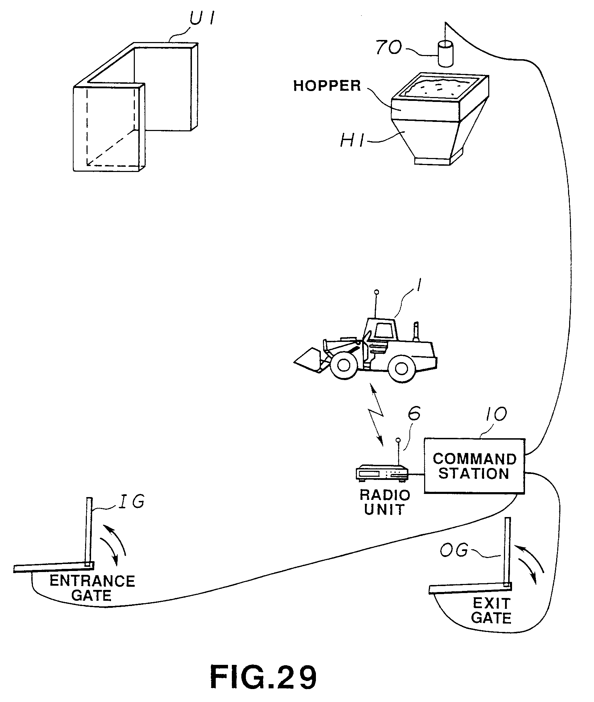

Fig. 29 is an illustrative view which shows by way of example the structure of a system for automatically determining whether the vehicle 1 performers a piling operation or not. In the shown case, in response to an output from the distance sensor 70 for detecting a quantity of material piled in the hopper, an output from an entrance gate switch IG for detecting that the dump truck 4 passes past an entrance gate for the system to convey the material and an output from an exit gate switch OG for detecting that the dump truck 4 passes past an exit gate for the system to leave the system, the system automatically determines whether the vehicle 1 performs a piling operation or not.

The entrance gate switch IG and the exit gate switch OG are attached to car gates so that a driver can raise and lower the respective car gates by shifting the entrance gate IG and the exit gate switch OG to ON or OFF. Information from the entrance gate switch IG and the exit gate switch OG are inputted into the command station 10. With this construction, the system can determine based on the information from the entrance gate switch IG and the exit gate switch OG whether the dump truck 4 enters the system or not, and moreover, it leaves the system or not.

As mentioned above, it is usually necessary to perform the piling operation after the dump truck 4 enters the system and then dumps the material in the shed.

To this end, the command station 10 executes the piling operation based on the information from the entrance gate switch IG and the exit gate switch OG after the dump truck 4 enters the system and then leaves the same. Since the vehicle 1 is required to convey the material from the shed to the hopper when the hopper is not filled with the material, the command station 10 detects based on the information from the distance sensor 70 that the hopper is fully filled with the material, and when it is found that the hopper is fully filled with the material, the vehicle 1 is caused to perform a piling operation to build a mountain-shaped material on the assumption that the operative conditions associated with the entrance gate switch IG and the exit gate switch OG are established.

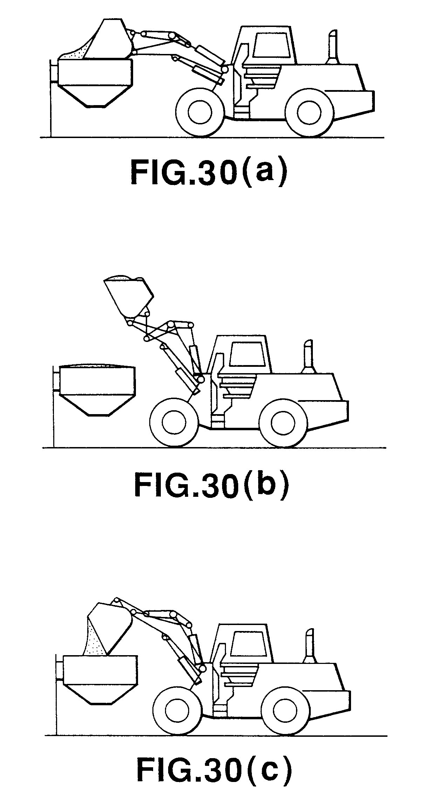

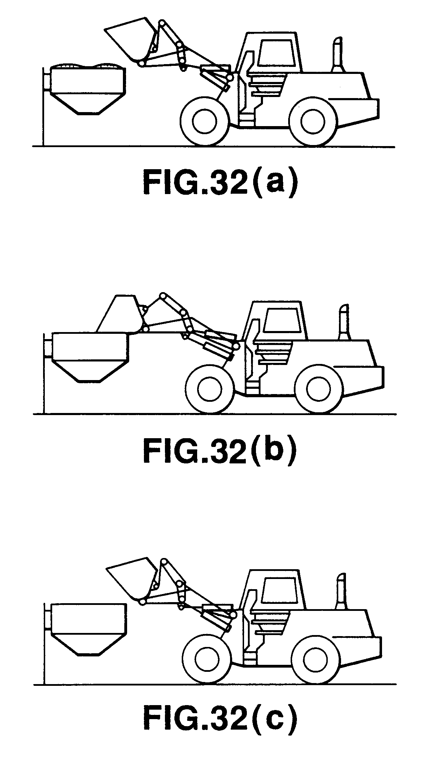

Next, an arching preventive operation to be performed at the hopper will be described in detail below. The arching preventive operation is classified into two types, one of them being a process as shown in Fig. 30(a) to Fig. 30(c) and the other one being a process as shown in Fig. 32(a) to Fig. 32(b). Either of the two types may be employed for achieving the arching preventive operation.

As mentioned above, there arises an occasion that the material stored in the hopper exhibits the arching state as shown in Fig. 42. Here, the operative state that only the material stored at the lower part of the hopper falls on the conveyor but the material stored at the upper part of the hopper does not fall down is called an arching state. When it is found that the arching state appears, an arching preventive operation is performed.

As shown in Fig. 3, a typical system for detecting the arching state is constructed such that the command station 10 detects the arching state in response to an output from the distance sensor 70 for detecting a quantity of material loaded in the hopper (i.e., a quantity of material remaining in the hopper) and an output from the photoelectric switch 73 for detecting that the material falls from the hopper. Specifically, when the photoelectric switch 73 is continuously turned on for a predetermined time (i.e., the material is falling) or when the output from the distance 70 hardly varies or fluctuates, this is detected as appearance of the arching state.

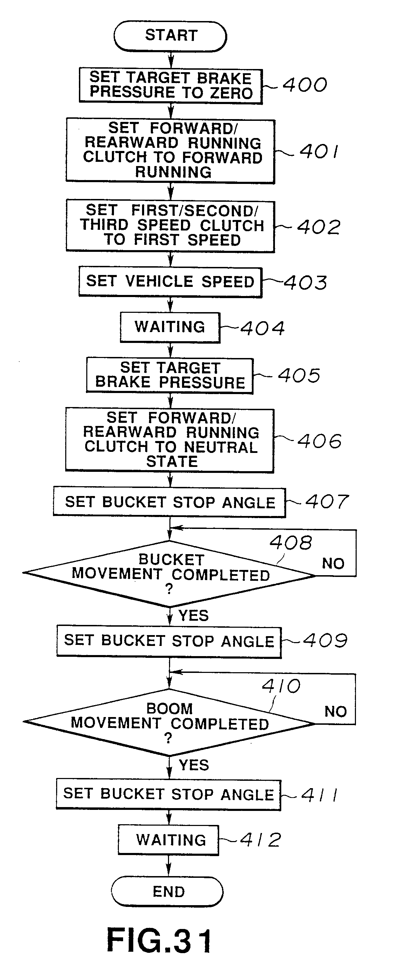

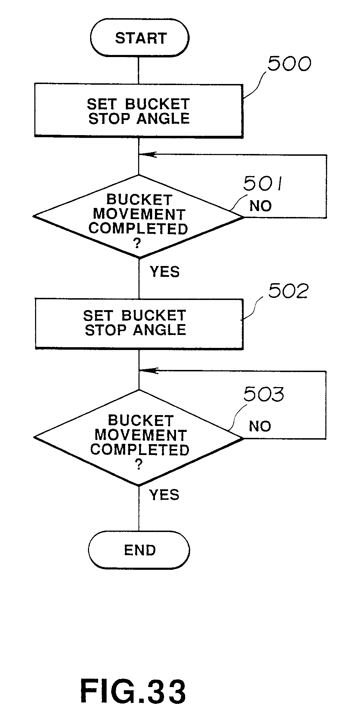

As shown in Fig. 16, a program for the microprocessor 30 for the purpose of performing an arching preventive operation is divided into a main routine 80 and a timer interruption routine 81. Fig. 31 is a flowchart which shows a procedure for operations to be executed by the main routine 80 by employing the process shown in Fig. 30, and Fig. 33 is a flowchart which shows a procedure for tasks to be done by the main routine 80 by employing the process shown in Fig. 32.

The main routine 80 for the arching preventive operation executes the following control items in the same manner as that for the scooping operation as mentioned above.

   1. control for sequentially writing various kinds of set values in the target value buffer 82 in accordance with a predetermined order.

   2. control for reading data from the measured value buffer 82.

   3. control for progressing a procedure for executing the controls by making various kinds of determinations.

Similarly, the timer interruption routine 81 for the arching preventive operation is a program to be executed at a predetermined time interval in the same manner as the timer interruption routine for the scooping operation, and it mainly executes the following two control items.

   1. control for reading data from various kinds of sensors and writing them in the measured value buffer 83.

   2. control for reading various kinds of set values from the target value buffer 82 and then driving a predetermined number of actuators so as to execute the following control items.

      speed control
      control for locating the boom and the bucket
      brake control

      control for shifting the transmission among first speed, second speed and third speed

      control for shifting the transmission from forward movement to rearward movement and vice versa

A procedure for arching preventive tasks to be done in accordance with the first process will be described below with reference to Fig. 30 and Fig. 31.

While the bucket is held in the initial state prior to an arching preventive operation, it is located at the position shown in Fig. 30(a). Specifically, the bottom surface of the bucket is horizontally placed on the upper side of the hopper or it is located slightly above the same.

   (1) step 400 --- A target brake pressure of the target value buffer 82 is set to zero in accordance with the main routine 80. This target brake pressure is incorporated in the timer interruption routine 81, whereby the brake is released from the locked state.

   (2) step 401 --- A target state of the forward/rearward movement clutch in the target value buffer 82 is set to forward movement in accordance with the main routine 80. This set state is incorporated in the timer interruption routine 81 so that the transmission is shifted to forward movement.

   (3) step 402 --- A target state of the first/second/third speed clutch in the target value buffer 82 is set to a first speed in accordance with the main routine 80. This set state is incorporated in the timer interruption routine 81 so that the transmission is shifted to the first speed.

   (4) step 403 --- A target speed in the target value buffer 82 is set to a predetermined value in accordance with the main routine 80. This set value is incorporated in the timer interruption routine 81, whereby the vehicle 1 starts to run in accordance with the aforementioned speed control. In this case, since the transmission is shifted to forward movement, the vehicle 1 runs in the forward direction.

   (5) step 404 --- After the vehicle 1 starts forward running, a waiting time (set time) is reserved to such an extent that it can move to the position where it can scoop the material stored at the upper part of the hopper with the bucket as shown in Fig. 30(a).

   (6) step 405 --- When the foregoing set time elapses, the main routine 80 sets a high intensity of target brake pressure in the target value buffer 82 in order to stop the movement of the vehicle 1. This set value is incorporated in the timer interruption routine 81, whereby brake control is started for the purpose of stopping the vehicle 1.

(7) step 406 --- The transmission is shifted to the neutral state likewise for the purpose of stopping the vehicle 1. In other words, a target state of the forward/rearward movement clutch in the target value buffer 82 is set to the neutral state in accordance with the main routine 80. This set state is incorporated in the timer interruption routine 81 so that the transmission is shifted to the neutral state.

(8) step 407 --- The main routine 80 sets a bucket target angular position in the target value buffer 82 in order to tilt the bucket. This bucket target angular position is coincident with a tilt end position shown in Fig. 30(b). This set value is incorporated in the timer interruption routine 81, whereby the bucket starts a tilting operation in accordance with the aforementioned locating control.

(9) step 408 --- This is a step of determining whether movement of the bucket to the tilt end position shown in Fig. 30(b) is completed or not. The main routine 80 reads the measured bucket angle in the measured value buffer 83, and when it is found that the measured bucket angle assumes a preset value, the movement of the bucket is once completed.

(10) step 409 --- To assure that each boom is raised up to a raising-up end position shown in Fig. 30(b), the main routine 80 sets a boom target angular position to the raising-up position shown in Fig. 30(b) (it is possible to arbitrarily change the boom target angular position), and subsequently, the boom target angular position is written in the target value buffer 82. This set value is incorporated in the timer interruption routine 81, whereby the booms start a raising-up operation in accordance with the aforementioned boom locating control.

(11) step 410 --- This is a step of determining whether each boom is displaced to the position shown in Fig. 30(b) or not. The main routine 80 reads the measured boom angle in the measured value buffer 83, and when it is found that the measured boom angle assumes a preset value, the displacement of the booms is stopped.

(12) step 411 --- To assure that the material is dumped from the bucket as shown in Fig. 30(c), the main routine 80 sets a bucket target angular position for the purpose of material-dumping in the target value buffer 82. This bucket target angular position is coincident with a position shown in Fig. 30(c). This set value is incorporated in the timer interruption routine 81, whereby the bucket starts a dumping operation in accordance with the aforementioned locating control.

(13) step 412 --- The vehicle 1 is held in the waiting state for a certain time suitable for allowing the material to be dumped from the bucket.

The procedure for performing an arching preventive operation by employing the first process has been described above.

Next, a procedure for preforming an arching preventive operation by employing the second process will be described below with reference to Fig. 32 and Fig. 33.

A significant feature of the second process shown in Fig. 32 consists in that shock is imparted to the material stored at the upper part of the hopper with the bucket of the working vehicle. While the bucket of the working vehicle is held in the initial state, it is located at the position shown in Fig. 32(a). In addition, it is assumed that movement of the working vehicle is completed so that the working vehicle is stopped at the position show in Fig. 32(a).

(1) step 500 --- The main routine 80 sets a bucket target angular position in the target value buffer 82 in order to move the bucket while the bucket is held at the position shown in Fig. 32-(a). This bucket target angular position is coincident with a position where the bucket collides against the hopper. The foregoing set value is incorporated in the timer interruption routine 81, whereby the bucket starts a damping operation in accordance with the aforementioned locating control.

(2) step 501 --- This is a step of determining whether the movement of the bucket to the position shown in Fig. 32(b) is completed or not. The main routine 80 reads the measured bucket angle in the measured value buffer 83 so that the movement of the bucket is once completed when the measured bucket angle assumes a preset value.

(3) step 502 --- To assure that the bucket is tilted from the position shown in Fig. 32(b), the main routine 80 sets a bucket target angular position in the target value buffer 82. This bucket target angular position is coincident with the position shown in Fig. 32(c). The position shown in Fig. 32(c) is coincident with the position shown in Fig. 32(a). The foregoing set value is incorporated in the timer interruption routine 81, whereby the bucket starts a tilting operation in accordance with the aforementioned locating control.

(4) step 503 --- This is a step of determining whether the movement of the bucket to the position shown in Fig. 32(c) is completed or not. The main routine 80 reads the measured bucket angle in the measured value buffer 83 so that the movement of the bucket is completed when the measured bucket angle assumes a preset value.

The procedure for performing an arching preventive operation by employing the second process has been described above. The procedure for performing an arching preventive operation by employing the second process as mentioned above may be realized such that dumping and tilting of the bucket are repeated plural times.

Next, a transverse conveying operation to be performed in the shed and the hopper will be described in detail below.

As mentioned above, since the material placed in the shed covered with a roof is wetted with moisture after it rains, there arises a necessity for a performing a transverse conveying operation by way of steps of scooping the material containing no moisture at the upper part of a material in the shed, dumping it in the hopper, scooping the remaining material containing moisture at the lower part of the material, conveying it to a unroofed shed, and dumping it on the unroofed shed so as to allow it to be dried.

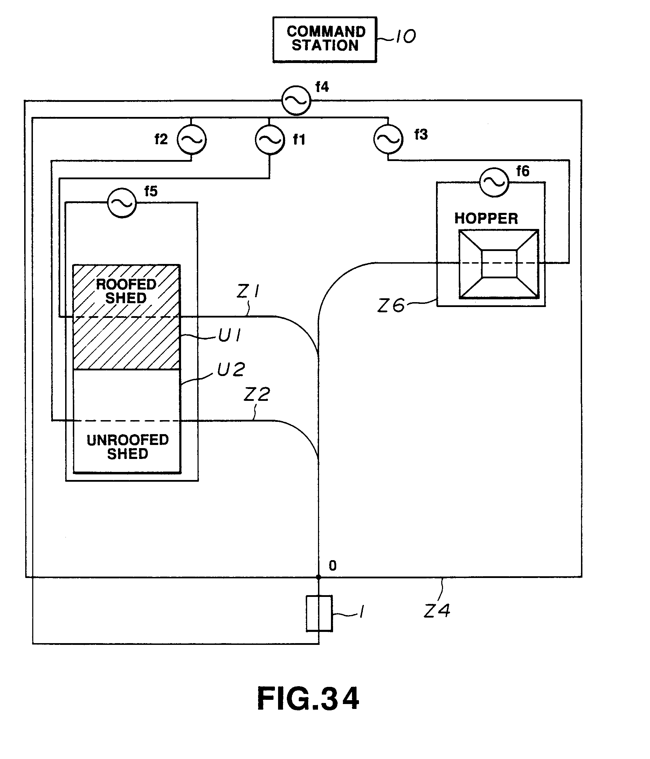

The transverse conveying operation will be described below with reference to a system as shown in Fig. 34. It should of course be understood that the transverse conveying operation may be achieved with the system shown in Fig. 1.

The system shown in Fig. 34 includes as separate cables a station line Z4 for an original point station O, a guide line Z1 for a running path extending from the original point O to a shed U1 covered with a roof, a guide line Z2 for a running path extending from the original point O to a unroofed shed U2, a guide line Z3 for a running path extending from the original point O to a hopper H1, a station line Z5 for a work starting station on the shed side, and a station line Z6 for a work starting station on the hopper side. An alternate current supply source having an oscillation frequency f1 is electrically connected to the guide line Z1, an alternate current supply source having an oscillation frequency f2 is electrically connected to the guide line Z2, an alternate current supply source having an oscillation frequency f3 is electrically connected to the guide line Z3, an alternate current supply source having an oscillation frequency f4 is electrically connected to a station line Z4, an alternate current supply source having an oscillation frequency f5 is electrically connected to the guide line Z5, and an alternate current supply source having an oscillation frequency f6 is electrically connected to the station line Z6. In case of the system shown in Fig. 34, the original point station is substituted for start point stations for the sheds U1 and U2 and the hopper H1.

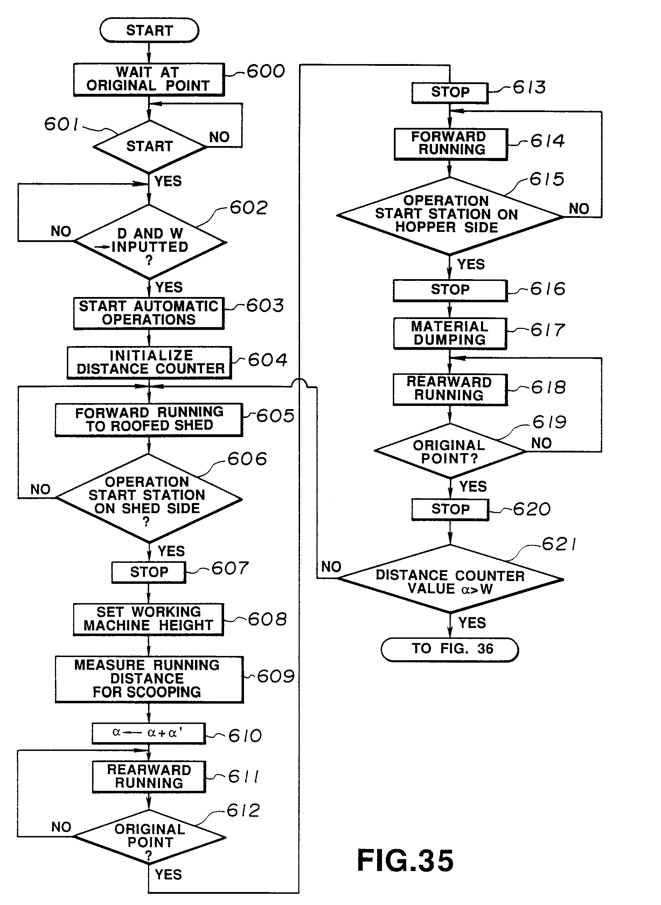

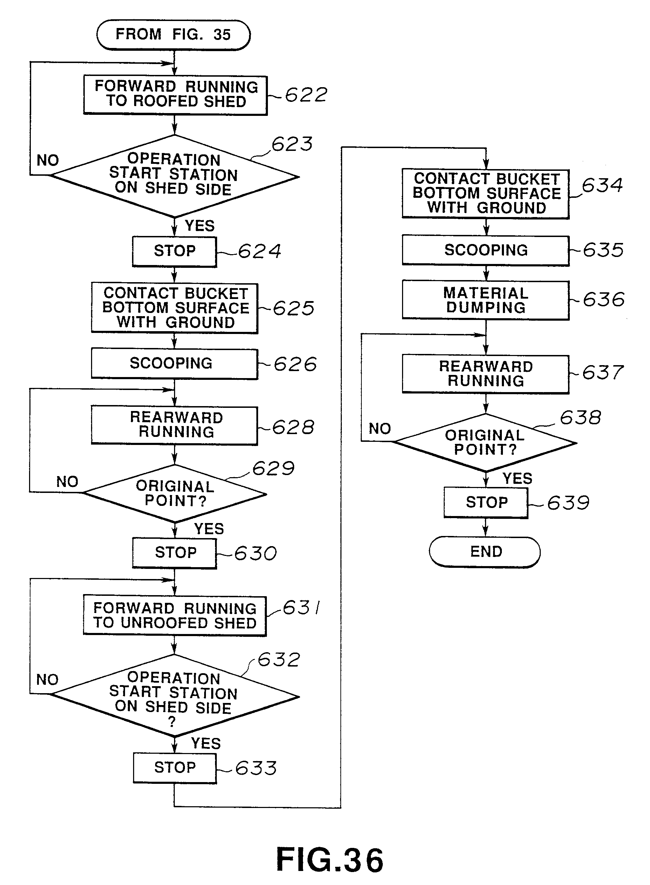

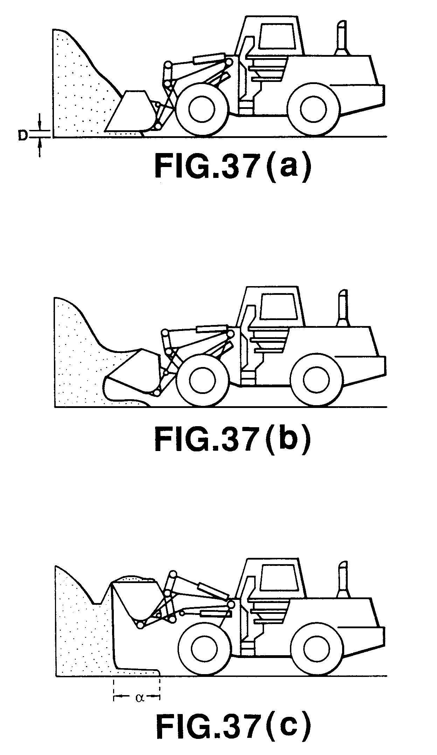

Details of the transverse conveying operation will be described below with reference to flowcharts shown in Fig. 35 and Fig. 36 and illustrative views shown in Fig. 37 to Fig. 40 each illustrating steps required for achieving the transverse conveying operation.

(1) step 600 --- The vehicle 1 is located in the waiting state at the original point station O.

(2) step 601 --- When a transverse conveying operation is performed, the command station 10 sends a command to the vehicle 1 so as to allow it to start movement.

(3) step 602 --- Prior to execution of the transverse conveying operation, an operator writes values D and W as noted below in a memory 31 of the microprocessor 30 via a console 90 (see Fig. 2).

value D -- height information for instructing how high the material wetted with moisture is placed on the shed U1 covered with a roof as measured from the ground surface

value W -- distance information for instructing how long a transverse conveying operation is to be performed for the material wetted with moisture as measured from a scooping operation start location after the material containing no moisture is scooped from the material and dumped in the hopper. It should be noted that scooping of the material containing no moisture and dumping of the same in the hopper are repeatedly executed plural times and that the value W, i.e., an information on the scooping distance represents a total distance corresponding to the scooping operation repeatedly achieved plural times.

The height information D and the distance information W are sent to the vehicle 1 from the command station 10. Since the height information D and the distance information W vary depending on various circumstantial conditions and an extent of wetness, it is recommendable that they are determined based on operator's experience and perception. In addition, the height information D and the distance information W may fixedly be set to a certain average value.

(4) step 603 --- When the vehicle 1 receives a command inclusive of the height information D and the distance information W from the command station 10, it starts an automated transverse conveying operation.

(5) step 604 --- The vehicle 1 is equipped with a distance sensor for measuring a running distance of the vehicle 1. Thus, the vehicle 1 measures a running distance from a scooping start position to a scooping completion position every time a scooping operation is performed, and a measured value $\alpha'$ is accumulated every time a scooping operation is completed in such a manner that it is updated and memorized in a predetermined region of the memory 31. Subsequently, the area in the memory 31 where the accumulated value $\alpha$ is updated and memorized is initialized (zero clear).

(6) step 605 to step 607 --- Next, the vehicle 1 starts forward running from the original point station O and goes toward the roofed shed U1 along the guide line Z1 (frequency f1). When the vehicle 1 detects a work start station on the shed side having an oscillation frequency f5, it once stops the running.

(7) step 608 --- The position of the working tools (including a bucket and booms) is determined as shown in Fig. 37(a) in such a manner that the bottom surface of the bucket extends in the horizontal direction and a distance of the same as measured from the ground surface assumes a preset value D.

(8) steps 609 and 610 --- Next, a scooping operation as shown in Fig. 35(a) to Fig. 35(c) is executed in accordance with the procedure shown in Fig. 15 and Fig. 17. In other words, this scooping operation is coincident with an operation for scooping the moisture-free material stored at the upper part of the material. To achieve the scooping operation, the running distance $\alpha'$ from the scooping operation start position to the scooping operation completion position is measured, and it is added to the counter value $\alpha$ memorized in the distance counter value memorizing area of the memory 31 so that the distance counter value memorizing area of the memory 31 is updated with the resultant value of $\alpha + \alpha'$ derived from the foregoing addition. Of course, it is obvious that the value $\alpha$ in the distance counter value memorizing area is initially kept zero.

A scooping operation start time point can be detected by employing the process to be practiced at the step 205 in the flowchart shown in Fig. 17, while a scooping operation completion time point can be detected by employing the process to be practiced at the step 206 to the step 211 in the flowchart shown in Fig. 17.

(9) step 611 to step 613 -- On completion of the first scooping operation, the vehicle 1 runs along the guide line Z1 (frequency f1) in the rearward direction so that it returns to the original point station O to stop the running.

(10) step 614 to step 616 -- The vehicle 1 starts forward running from the original point station O again so that it goes toward the hopper H1 along the guide line Z3 (frequency f3). When the vehicle 1 detects an operation start station on the hopper side with the oscillation frequency f6, it once stops the running.

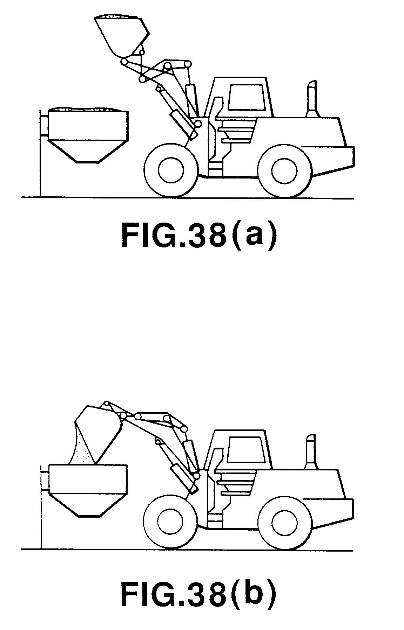

(11) step 617 --- Subsequently, the vehicle 1 executes a material dumping operation as shown in Fig. 38(a) and Fig. 38(b). This material dumping operation is substantially coincident with the procedure for a part of the arching preventive operation shown in Fig. 29 (Fig. 30(b) and Fig. 30(c)).

(12) step 618 to step 620 --- On completion of the first material dumping operation, the vehicle 1 runs along the guide line Z3 (frequency f3) in the rearward direction so that it returns to the original point station O to stop the running.

(13) step 621 --- At this step, the vehicle 1 completes sequential operations represented by scooping operation → material dumping operation and then determines whether or not the program goes to a next procedure (i.e., a transverse conveying operation for drying the moist material) or whether or not the vehicle 1 executes sequential operations represented by scooping operation → material dumping operation again the same manner as mentioned above.

Specifically, in case that the distance counter value $\alpha$ memorized in the memory 31 is less than the running distance preset value W, the program returns to the step 605 at which the vehicle 1 executes sequential operations represented by scooping operation → material dumping operation again in the same manner as mentioned above. However, in case that the distance counter value a memorized in the memory 31 exceeds the running distance preset value W, the program goes to the step 622 shown in Fig. 36 at which the vehicle 1 executes a transverse conveying operation for drying the moist material. In such manner, the vehicle 1 executes the scooping operation corresponding to the preset scooping distance and then dumps the dry material stored at the upper part of the material.

(14) step 622 to step 624 --- The vehicle 1 starts to run from the original point station O in the forward direction so that it goes toward the roofed shed U1 along the guide line Z1 (frequency f1). When the vehicle 1 detects the work start station having a frequency f5 on the shed side, it once stops the running.

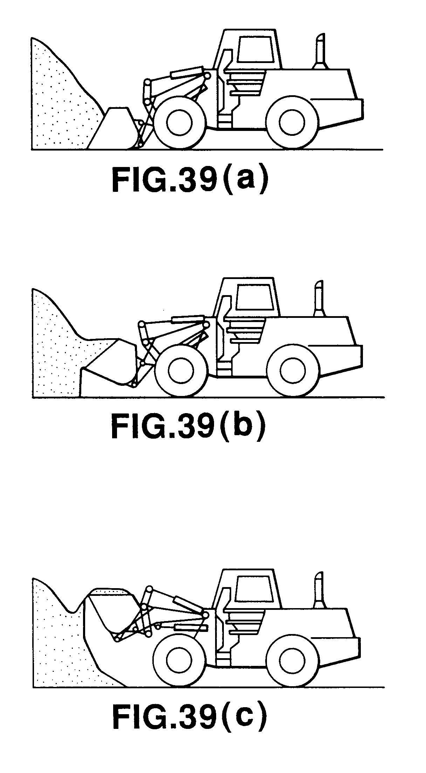

(15) step 625 --- The position of the working tools (including a bucket and booms) is determined as shown in Fig. 39(a) in such a manner that the bottom surface of the bucket extends on the ground surface in the horizontal direction and comes in contact with the ground surface.

(16) step 626 --- Next, the vehicle 1 executes a scooping operation as shown in Fig. 39(a) to Fig. 39(c) in accordance with the procedure shown in Fig. 15 and Fig. 16. In other words, this scooping operation is coincident with an operation for scooping the moist material stored at the lower part of the material in the roofed shed U1.

(17) step 628 to step 630 --- Subsequently, the vehicle 1 runs along the guide line Z2 (frequency f2) in the rearward direction so that it returns to the original point station O to stops the running.

(18) step 631 to step 633 --- The vehicle 1 starts to run from the original point station O in the forward direction again so that it goes toward the unroofed shed U2 along the guide line Z2 (frequency f2) in order to convey the moist material loaded in the bucket to the unroofed shed U2 and then dry the same. When the vehicle 1 detects the work start station having an oscillation frequency f5 on the shed side, it once stops the running.

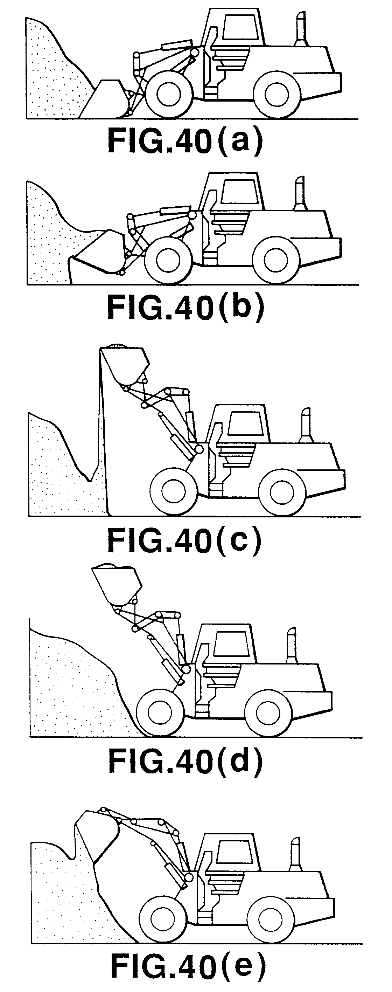

(19) step 634 --- The position of the working vehicle (including a bucket and booms) is determined as shown in Fig. 40(a) in such a manner that the bottom surface of the bucket extends on the ground surface in the horizontal direction and comes in contact with the ground surface.

(20) steps 635 and 636 --- Subsequently, the vehicle 1 executes the substantially same piling operation as that shown in Fig. 25 and dumps the scooped-up material as shown in Fig. 40(a) to Fig. 40(e).

(21) step 637 to step 639 --- Subsequently, the vehicle 1 runs along the guide line Z2 (frequency f2) in the rearward direction so that it returns to the original point station O to stop the running.

(22) On completion of a series of operations as mentioned above, the vehicle 1 sends a command to the command station 10 to instruct that the aforementioned operations are completed. Thus, all the operations are completed.

In the aforementioned embodiment, the transverse conveying operation is achieved such that when the total value corresponding to the scooping distance for the dry material assumes a preset value, a procedure for drying a next moist material is executed. Alternatively, the transverse conveying operation may be achieved on the assumption that the number of scooping tasks to be done for the dry material is preset. In this case, when the foregoing number assumes the preset value, the procedure for drying a next moist material is executed.

In addition, to achieve the transverse conveying operation, the scooping operation shown in Fig. 25 is substituted for the material dumping operation in the shed. Alternatively, a usual material dumping operation may be performed for achieving the transverse conveying operation. Further, operations for conveying the moist material to the unroofed shed (step 622 to step 639) may be repeated plural times on the assumption that the number of distance measurements and repetitions is preset.

INDUSTRIAL APPLICABILITY

The present invention is advantageously employable for a material conveying system wherein various kinds of operations such as a material conveying operation, a piling operation, an arching preventive operation, a transverse conveying operation and so forth to be performed in a factory for preparing asphalt and concrete including a shed serving as a material stock yard and a hopper serving as material dumping site are automatically executed by operating a working vehicle.

**Claims**

1. A working vehicle controlling apparatus in a material conveying system including a command station wherein a material stocked on a material stock yard is conveyed to a hopper by an automatically travellable working vehicle which communicates with the command station, comprising:

    a memory for storing a plurality of fundamental work pattern programs, said fundamental work pattern programs being prepared such that a plurality of different tasks to be done by said working vehicle are divided into a plurality of fundamental work patterns each being not common to others and the divided fundamental work patterns are taken out one by one so as not to be common to said plurality of tasks and said plurality of fundamental work pattern programs respectively corresponding to said plurality of fundamental work patterns; and

    automatic controlling means for combining said plurality of fundamental work pattern programs in accordance with a work instruction when the work instruction is received from said command station, and for automatically executing a task in accordance with said combined fundamental work pattern programs,

    wherein said memory and said automatic controlling means are mounted on said working vehicle.

2. A working machine controlling apparatus in a material conveying system including a command station, an automatically travellable working vehicle which communicates with said command station, a material stock yard for stocking a material in the mountain-shaped geometrical configuration and a hopper to which said material is conveyed from said material stock yard, characterizes in that:

    a program for tasks to be done by said working vehicle comprises a main routine which is a program of a whole procedure for tasks to be done by said working machine and a timer interruption routine adapted to be executed by an interruption of a timer at a predetermined time interval for obtaining outputs from various kinds of sensors provided in said working vehicle and driving various kinds of actuators provided in said working vehicle:

there are provided a target value buffer for storing a plurality of target values set in accordance with said main routine and a measured value buffer for storing measured value data obtained by the measurements conducted by said timer interruption routine;

said main routine executes the whole procedure for tasks to be done by said working vehicle by writing preset values in said target value buffer and reading said measured values from said measured value buffer; and

said timer interruption routine individually executes vehicle speed control, working tools positioning control, brake control, speed changing transmission shift control and forward/rearward transmission shift control.

3. A working vehicle controlling apparatus in a material conveying system wherein a material scooping operation is automatically executed in a material stock yard where a material is stocked in a mountain-shaped geometrical configuration by an automatically travellable working vehicle which has a boom and a bucket, comprising:

boom load detecting means for detecting a load exerted on said booms;

boom raising start detecting means for determining a boom raising start by detecting the time when an output from said boom load detecting means exceeds a preset value;

running distance measuring means for measuring a vehicle running distance from the time when the detection value of said boom load detecting means starts to vary after forward movement of said working vehicle prior to said scooping operation to the time when a detection signal is outputted from said boom raising start detecting means;

determining means for determining the adhesiveness and the geometrical configuration of a material to be scooped based on an output from said boom load detecting means when said scooping operation is completed and an output from said running distance measuring means; and

controlling means for controlling a preset value for starting of raising up said booms at the time of a subsequent scooping operation or a preset vehicle speed or a scooping operation pattern in accordance with the result of the determination made by said determining means,

wherein said determining means and said controlling means are mounted on said working vehicle.

4. A working vehicle controlling apparatus in a material conveying system wherein a material placed on a material stock yard is conveyed to a hopper by an automatically travellable working vehicle, and a material piling operation is automatically executed in said material stock yard by said working vehicle to build the material in a mountain-shaped configuration, comprising:

operation start position detecting means for detecting an operation start station placed on said material stock yard;

boom load detecting means for detecting a load exerted on a boom of said working vehicle;

first controlling means for starting forward running of said working vehicle while said boom and a bucket are in lowered positions when a detection signal is outputted from said operation start position detecting means;

second controlling means for starting raising and tilting of said boom and said bucket after completion of the forward running of said working vehicle when an output from said boom load detecting means exceeds a preset value to start raising of said boom so as to raise and tilt said boom and said bucket to preset target angles;

third controlling means for stopping the movement of said boom and said bucket when said boom and said bucket reach said target angles, and stopping the forward running of said working vehicle;

fourth controlling means for raising said boom to a preset final raising position after the running of said working vehicle is stopped, and stopping the movement of said boom; and

fifth controlling means for allowing said working vehicle to run in the forward direction at a predetermined distance when the movement of said booms is stopped at said final raising position, and thereafter stopping the running of said working vehicle and dumping the scooped material by actuating said bucket to a dumping position,

wherein said operation start position detecting means, said boom load detecting means and said first through fifth controlling means are mounted on said working vehicle so as to achieve said piling operation with said working vehicle.

5. A working vehicle controlling apparatus in a material conveying system as claimed in claim 4, further comprises:

    hopper load detecting means for detecting quantity of material loaded in a hopper;

    a gate open/close detector for detecting the open/close state of an entrance gate and an exit gate for a dump truck which enters said material conveying system; and

    a command station for detecting in response to an output from said hopper load detecting means that said hopper is fully filled with a material, detecting in response to an output from said gate open/close detector that said dump truck enters and then leaves said material conveying system, and allowing said working vehicle to execute a piling operation.

6. A working vehicle controlling apparatus in a material conveying system wherein a material stocked in a material stock yard is conveyed to a hopper by an automatically travellable working vehicle, and an arching preventive operation is automatically executed by said working vehicle so as to eliminate an arched state in said hopper with said working vehicle, comprising:

    operation start position detecting means for detecting an operation start station placed before said hopper;

    first controlling means for allowing said working vehicle to start forward running while a boom and a bucket are raised to a predetermined height when a detection signal is outputted from said operation start position detecting means;

    second controlling means for stopping said working vehicle at the position before said hopper after completion of the forward running of said working vehicle, starting raising of the boom and the bucket after said working vehicle stops, and raising and tilting said boom and said bucket to predetermined target positions so as to allow a material in said hopper to be scooped by said bucket;

    third controlling means for stopping the movement of said boom and said bucket when said boom and said bucket reach said predetermined target positions; and

    fourth controlling means for allowing the scooped material to be dumped by actuating said bucket,

    wherein said operation start position detecting means and first through fourth controlling means are mounted on said working vehicle so as to achieve an arching preventive operation with said working vehicle.

7. A working vehicle controlling apparatus in a material conveying system as claimed in claim 6, further comprising:

    arching state detecting means for detecting the arching state of said hopper; and

    a command station for allowing said working vehicle to execute an arching preventive operation when the arching state is detected by said arching state detecting means.

8. A working vehicle controlling apparatus in a material conveying system as claimed in claim 7, wherein said arching state detecting means includes:

    hopper load detecting means for detecting quantity of material received in said hopper;

    material falling detecting means for detecting falling of said material from said hopper; and

    detecting means for detecting with the aid of said material falling detecting means that said material is falling from said hopper for a period of time longer than a predetermined time, and detecting that an arching state exists when the detected value of said hopper load detecting means does not vary greatly.

9. A working vehicle controlling apparatus in a material conveying system wherein a material stocked in a material stock yard is conveyed to a hopper by an automatically travellable working vehicle, and an arching preventive operation is automatically executed by said working vehicle so as to eliminate the arching state in said hopper with said working vehicle, comprising:

    first controlling means for moving said working vehicle to a position before said hopper while a boom and a bucket are raised to a first position higher than said hopper;

    second controlling means for tilting said bucket from said first position to a predetermined second position where said material is dumped in said hopper; and

    third controlling means for tilting said bucket from said second position to said first position,

    wherein said first through third controlling means are mounted on said working vehicle so as to execute said arching preventive operation with said working vehicle.

10. A working vehicle controlling apparatus in a material conveying system as claimed in claim 9, wherein said working vehicle controlling apparatus includes:

    arching state detecting means for detecting an arching state of said hopper; and

a command station for allowing said working vehicle to execute said arching preventive operation when said arching state is detected by said arching state detecting means.

11. A working vehicle controlling apparatus in a material conveying system as claimed in claim 10, wherein said arching state detecting means includes:

hopper load detecting means for detecting a quantity of material received in said hopper;

material falling detecting means for detecting falling of said material from said hopper; and

detecting means for detecting with the aid of said material falling detecting means that said material is falling from said hopper for a period of time longer than a predetermined time, and detecting that an arching state exists when the detected value of said hopper load detecting means does not change greatly.

12. A working vehicle controlling apparatus in a material conveying system wherein a material stocked in a roofed or unroofed material stock is conveyed to a hopper by an automatically travellable working vehicle, a dry material stored at the upper part of the material stocked in said roofed material stock yard is conveyed to said hopper by said working vehicle, and a moist material stored at the lower part of said material stocked in said roofed material stock yard is conveyed to said unroofed material stock yard by said working vehicle so as to automatically execute a transverse conveying operation in order to dry said moist material in said unroofed material stock yard, comprising:

height setting means for setting a height of the boundary between said dry material stored at the upper part of said material and said moist material stored at the lower part of said material stocked in said roofed material stock yard;

length setting means for setting a final scooping length for a bucket to scoop said dry material stored at the upper part of said material stocked in said roofed material stock yard;

running distance measuring means for measuring a running distance when said working vehicle performers a scooping operation with said bucket;

first controlling means for bringing said bucket to a height set by said height setting means so as to load said bucket with said dry material in said roofed material stock yard by executing a scooping operation with said working vehicle;

accumulating means for accumulating an output from said running distance measuring means every time said scooping operation is achieved;

second controlling means for allowing said working vehicle to run to said hopper after said dry material is loaded in said bucket with the aid of said first controlling means in order to dump said dry material in said hopper;

third controlling means for repeatedly executing scooping operation in said roofed material stock yard and material dumping operations in said hopper with the aid of said first controlling means and said second controlling means until an output from said accumulating means exceeds a set value set by said scooping length setting means;

fourth controlling means for executing a scooping operation for said moist material stocked in said roofed material stock yard while the bottom surface of said bucket is brought in contact with the ground surface when said output from said accumulating means exceeds said set value set by said scooping length setting means; and

fifth controlling means for allowing said working vehicle to run to said unroofed material stock yard after completion of the material loading operation with the aid of said fourth controlling means in order to dump said moist material stocked in said unroofed material stock yard,

wherein said height setting means, said length setting means, said running distance measuring means, said accumulating means and said first through fifth controlling means are mounted on said working vehicle so as to achieve said transverse conveying operation with said working vehicle.

13. A working vehicle controlling apparatus in a material conveying system wherein a material stocked in a roofed or unroofed material stock yard is conveyed to a hopper by an automatically travellable working vehicle, a dry material stored at the upper part of the material stocked in said roofed material stock yard is conveyed to said hopper by said working vehicle, and a moist material stored at the lower part of said material stocked in said roofed material stock yard is conveyed to said unroofed material stock yard by said working vehicle so as to automatically execute a transverse conveying operation in order to dry said moist material in said unroofed material stock yard, comprising:

height setting means for setting a height of the boundary between said dry material stored at the upper part of said material and said moist material stored at the lower part of said material stocked in said roofed material stock yard;

number setting means for setting the number of scooping operation to be performed by said working vehicle until said dry material placed on said roofed material stock yard is completely scooped in a bucket;

first controlling means for bringing said bucket to a height set by said height setting means so as to load said bucket with said dry material in said roofed material stock yard by executing a scooping operation with said working vehicle;

second controlling means for allowing said working vehicle to run to said hopper after said dry material is loaded in said bucket with the aid of said first controlling means in order to dump said dry material in said hopper;

third controlling means for repeatedly executing material scooping operations in said roofed material stock yard and material dumping operations in said hopper with the aid of said first controlling means and said second controlling means until the number of scooping operations performed with the aid of said first controlling means coincides with the number of scooping operations set by said number setting means;

fourth controlling means for executing a scooping operation for said moist material stocked in said roofed material stock yard while the bottom surface of said bucket is brought in contact with the ground surface when the number of scooping operations performed with the aid of said first controlling means exceeds the number of scooping operations set by said number setting means; and

fifth setting means for allowing said working vehicle to run to said unroofed material stock yard after completion of the material loading operation with the aid of said fourth controlling means in order to dry said moist material on said unroofed material stock yard,

wherein said height setting means, said number setting means and said first through fifth controlling means are mounted on said working vehicle so as to achieve said transverse conveying operation with said working vehicle.

**FIG.1**

EP 0 585 462 A1

**FIG.2**

**FIG.3**

EP 0 585 462 A1

| 1 MATERIAL SUPPLYING COMMAND | 2 PILING COMMAND | 3 ARCHING PREVENTIVE COMMAND | 4 TRANSVERSE CONVEYING COMMAND | 5 WAITING COMMAND | 6 PRODUCT OUTFEED COMMAND | 7 PRODUCT INFEED COMMAND |
|---|---|---|---|---|---|---|
| f MOVEMENT BETWEEN START POINTS | f MOVEMENT BETWEEN START POINTS | f MOVEMENT BETWEEN START POINTS | f MOVEMENT BETWEEN START POINTS | f MOVEMENT BETWEEN START POINTS | f MOVEMENT BETWEEN START POINTS | f MOVEMENT BETWEEN START POINTS |
| a SCOOPING AT SHED | e PILING | d ARCHING PREVENTION | a SCOOPING AT SHED | | a SCOOPING AT SHED | h PRODUCT RECEIVING |
| f MOVEMENT BETWEEN START POINTS | | | f MOVEMENT BETWEEN START POINTS | | f MOVEMENT BETWEEN START POINTS | f MOVEMENT BETWEEN START POINTS |
| c UNLOADING IN HOPPER | | | c UNLOADING IN HOPPER | | g PRODUCT LOADING | b UNLOADING AT SHED |
| | | | f MOVEMENT BETWEEN START POINTS | | | |
| | | | a SCOOPING AT SHED | | | |
| | | | f MOVEMENT BETWEEN START POINTS | | | |
| | | | b UNLOADING AT SHED | | | |

FIG.4

START

SEND OPERATION COMMAND
TO CONSTRUCTION VEHICLE — 100

SHIFT GUIDE LINE — 101

SHIFT START
POINT STATION — 102

PRIMITIVE
OPERATION COMPLETION
COMMAND RECEIVED
? — 103

NO

YES

SHIFT GUIDE LINE — 104

SHIFT START POINT STATION — 105

OPERATION
COMPLETION COMMAND
RECEIVED
? — 106

NO

YES

END

# FIG.5

START

OPERATION COMMAND FROM COMMAND STATION RECEIVED ? — 110 — NO

YES

PREPARE OPERATION PATTERNS CORRESPONDING TO RECEIVED OPERATION COMMANDS — 111

115

EXECUTE PRIMITIVE OPERATION PATTERN — 112

SEND PRIMITIVE OPERATION PATTERN COMPLETION COMMAND — 115

COMPLETED ? — 113 — NO

YES

NO — OPERATION COMPLETED? — 114

YES

SEND OPERATION COMPLETION COMMAND — 115

END

# FIG.6

```
        ┌─────────────────┐
        │    LOADING       │
        │    AT SHED       │
        └─────────────────┘
                │
                ▼
        ┌─────────────────┐
        │  START FORWARD   │ ── 120
        │    RUNNING       │
        └─────────────────┘
                │
                ▼
            ╱╲
          ╱    ╲
        ╱ OPERATION╲ ── 121
      ╱ START STATION ON SHED ╲  NO
      ╲  SIDE DETECTED  ╱ ────────┐
        ╲     ?      ╱            │
          ╲  YES  ╱               │
                │                 │
                ▼                 │
        ┌─────────────────┐       │
        │     START        │ ── 122│
        │    SCOOPING      │       │
        └─────────────────┘       │
                │                 │
                ▼                 │
            ╱╲
          ╱    ╲
        ╱SCOOPING╲ ── 123  YES
      ╱ LIMIT STATION ╲ ─────────▶ ( ERROR )
      ╲  DETECTED?   ╱
        ╲        ╱
          ╲  NO ╱
                │
                ▼
            ╱╲
          ╱    ╲
 NO     ╱SCOOPING╲ ── 124
◀──────╱ COMPLETED ╲
        ╲    ?    ╱
          ╲ YES ╱
                │
                ▼
        ┌─────────────────┐
        │ START REARWARD   │ ── 125
        │    RUNNING       │
        └─────────────────┘
                │
                ▼
            ╱╲
          ╱    ╲
        ╱ START  ╲ ── 126  NO
      ╱ POINT STATION ╲ ───────┐
      ╲  DETECTED?   ╱         │
        ╲        ╱
          ╲ YES ╱
                │
                ▼
           ( END )
```

# FIG.7

```
            ┌─────────────────┐
            │   UNLOADING     │
            │   AT SHED       │
            └────────┬────────┘
                     │
            ┌────────▼────────┐
            │ START FORWARD   │──── 130
            │   RUNNING       │
            └────────┬────────┘
                     │
                     ▼◄──────────────────────┐
                   ╱   ╲                      │
                  ╱ OPERATION ╲  131          │
                 ╱ START STATION ╲  NO        │
                ◄  ON SHED SIDE   ►───────────┘
                 ╲  DETECTED     ╱
                  ╲     ?      ╱
                   ╲   ╱
                     │ YES
            ┌────────▼────────┐
            │ START MATERIAL  │──── 132
            │   DUMPING       │
            └────────┬────────┘
                     │
                     ▼◄──────────────────────┐
                   ╱   ╲                      │
                  ╱ SCOOPING ╲  133           │
                 ╱   LIMIT    ╲  YES   ┌──────────┐
                ◄   STATION    ►──────►│  ERROR   │
                 ╲ DETECTED?  ╱        └──────────┘
                  ╲         ╱                  │
                   ╲   ╱                       │
                     │ NO                      │
                     ▼                         │
                   ╱   ╲                       │
         NO       ╱ MATERIAL ╲  134            │
       ◄─────────◄ DUMPING COMPLETED ►─────────┘
                 ╲     ?     ╱
                  ╲       ╱
                   ╲   ╱
                     │ YES
            ┌────────▼────────┐
            │ START REARWARD  │──── 135
            │   RUNNING       │
            └────────┬────────┘
                     │
                     ▼◄──────────────────────┐
                   ╱   ╲                      │
                  ╱  START  ╲  136            │
                 ╱   POINT   ╲  NO            │
                ◄   STATION   ►───────────────┘
                 ╲ DETECTED? ╱
                  ╲       ╱
                   ╲   ╱
                     │ YES
                ┌────▼────┐
                │   END   │
                └─────────┘
```

# FIG.8

```
        ┌─────────────┐
        │  UNLOADING  │
        │  AT HOPPER  │
        └─────────────┘
               │
               ▼
        ┌─────────────┐
        │ START FORWARD│  ─ 140
        │   RUNNING   │
        └─────────────┘
               │
               ▼
             OPERATION              141
         START STATION ON HOPPER ──── NO
           SIDE DETECTED?
               │
              YES
               │
               ▼
        ┌─────────────┐
        │START MATERIAL│  ─ 142
        │   DUMPING   │
        └─────────────┘
               │
               ▼
              MATERIAL              143
    NO ──── DUMPING COMPLETED
                   ?
               │
              YES
               ▼
        ┌─────────────┐
        │START REARWARD│  ─ 144
        │   RUNNING   │
        └─────────────┘
               │
               ▼
              START                 145
          POINT STATION ──── NO
            DETECTED
                ?
               │
              YES
               ▼
           ┌────────┐
           │  END   │
           └────────┘
```

# FIG.9

**FIG.10**

PILING

START FORWARD RUNNING — 160

OPERATION START STATION ON SHED SIDE DETECTED? — 161 → NO

YES

START PILING — 162

SCOOPING LIMIT STATION DETECTED ? — 163 → YES → ERROR

NO

PILING COMPLETED ? — 164 → NO

YES

START REARWARD RUNNING — 165

START POINT STATION DETECTED? — 166 → NO

YES

END

FIG.11

```
┌─────────────────────────┐
│  MOVEMENT  BETWEEN      │
│  START  POINTS          │
└─────────────────────────┘
            │
            ▼
    ┌───────────────┐
    │    START      │ ──── 170
    │   RUNNING     │
    └───────────────┘
            │
            ▼ ◄─────────────────────┐
      ◇─────────────────◇           │
     ◇   STATION         ◇  171  NO │
     ◇   DETECTED         ◇─────────┘
      ◇      ?           ◇
         ◇──────◇
            │ YES
            ▼
      (   END   )
```

# FIG.12

```
┌─────────────────────────┐
│     PRODUCT             │
│     LOADING             │
└─────────────────────────┘
            │
            ▼
    ┌───────────────────┐
    │  START FORWARD    │ ──── 180
    │    RUNNING        │
    └───────────────────┘
            │
            ▼ ◄──────────────────────────┐
      ◇───────────────────────◇          │
     ◇      PRODUCT            ◇  181  NO │
    ◇ LOADING START STATION     ◇────────┘
     ◇      DETECTED?          ◇
      ◇─────────────────────◇
            │ YES
            ▼
      ┌───────────────┐
      │    START      │ ──── 182
      │   LOADING     │
      └───────────────┘
            │
    ┌───────▼
    │  ◇─────────────────◇
    │ ◇   LOADING         ◇  183
  NO│ ◇  COMPLETED        ◇────
    │  ◇      ?          ◇
    └───◇──────◇
            │ YES
            ▼
      ┌───────────────────┐
      │  START REARWARD   │ ──── 184
      │     RUNNING       │
      └───────────────────┘
            │
            ▼ ◄──────────────────────────┐
      ◇───────────────────────◇          │
     ◇      START             ◇  185      │
    ◇  POINT  STATION          ◇  NO ─────┘
     ◇     DETECTED?          ◇
      ◇─────────────────────◇
            │ YES
            ▼
      (   END   )
```

# FIG.13

44

FIG.14

FIG.15(a)

FIG.15(b)

FIG.15(c)

FIG.16

**TIME INTERRUPTION ROUTINE** — 81

SENSOR

ACTUATOR

**TARGET VALUE BUFFER**

- TARGET BOOM ANGLE
- TARGET BUCKET ANGLE
- TARGET SPEED
- TARGET BRAKE PRESSURE
- STATE OF FIRST/SECOND/THIRD SPEED CLUTCH
- STATE OF FORWARD/REARWARD RUNNING CLUTCH

**MEASURED VALUE BUFFER** — 83

- MEASURED BOOM PRESSURE
- MEASURED BUCKET ANGLE
- MEASURED BOOM ANGLE
- MEASURED BUCKET ANGLE
- MEASURED VEHICLE SPEED
- MEASURED BRAKE PRESSURE

**MAIN ROUTINE** — 80

**FIG.17**

FIG.18

Va MAX : ACCELERATION
COMMAND MAXIMUM VOLTAGE

49

FIG.19

START

READ TARGET BOOM ANGLE (=θg) ~230

READ MEASURED BOOM ANGLE (=θr) ~231

232
θg/θr
NO          YES

233
Vboom ← BOOM RAISING MAXIMUM COMMAND VALUE

234
Vboom ← BOOM NEUTRAL VOLTAGE

END

## FIG.20

Vboom

BOOM RAISING COMMAND VOLTAGE

BOOM NEUTRAL COMMAND VOLTAGE

0                                    θ

## FIG.21

```
        ┌───────────┐
        │   START   │
        └───────────┘
              │
              ▼
    ┌──────────────────────┐
    │    READ TARGET       │──── 240
    │ BUCKET ANGLE (=Φg)   │
    └──────────────────────┘
              │
              ▼
    ┌──────────────────────┐
    │   READ MEASURED      │──── 241
    │ BUCKET ANGLE (=Φr)   │
    └──────────────────────┘
              │
              ▼            242
       NO   ◇───────◇    YES
     ┌──────│ Φg < Φr │──────┐
     │      ◇───────◇        │
     │                       │
     ▼      243              ▼      244
┌──────────────────────┐  ┌──────────────────────┐
│ Vboom ← BUCKET TILTING│  │ Vbacket ← BUCKET     │
│ MAXIMUM COMMAND VOLTAGE│ │ NEUTRAL VOLTAGE      │
└──────────────────────┘  └──────────────────────┘
     │                       │
     └───────────┬───────────┘
                 ▼
          ┌───────────┐
          │    END    │
          └───────────┘
```

# FIG.22

Vbacket

BUCKET TILTING
COMMAND VOLTAGE

BUCKET NEUTRAL
COMMAND VOLTAGE

0                                    φε

# FIG.23

VbMAX : BRAKE COMMAND MAXIMUM VOLTAGE

FIG.24

FIG.25(a)

FIG.25(b)

FIG.25(c)

FIG.25(d)

FIG.25(e)

```
                    START

            SET TARGET
         BRAKE PRESSURE          ~300
            TO ZERO

         SET FORWARD/
       REARWARD RUNNING           ~301
           CLUTCH TO
       FORWARD RUNNING

       SET FIRST/SECOND/
      THIRD SPEED CLUTCH          ~302
         TO FIRST SPEED

      SET BOOM PRESSURE
       VALUE FOR BOOM             ~303
       RAISING START

      SET VEHICLE SPEED           ~304

                                 305
            MEASURED
        BOOM PRESSURE>                    NO
     BOOM RAISING START
           PRESSURE
              ?
              YES

    SET TARGET BOOM ANGLE         ~306

         WAITING                  ~307

    SET TARGET  BUCKET ANGLE      ~308

         WAITING                  ~309

                                 310
           BUCKET
          MOVEMENT                        NO
         COMPLETED
             ?
           YES
                                 311
            BOOM
          MOVEMENT                        NO
         COMPLETED
             ?
             YES


            SET TARGET
          BRAKE PRESSURE          ~312

         SET FORWARD/
       REARWARD RUNNING           ~313
       CLUTCH TO NEUTRAL

      SET BOOM STOP ANGLE         ~314

                                 315
            BOOM
          MOVEMENT                        NO
         COMPLETED
             ?
             YES

            SET TARGET
         BRAKE PRESSURE           ~316
            TO ZERO

         SET FORWARD/
       REARWARD RUNNING           ~317
           CLUTCH TO
       FORWARD RUNNING

      SET VEHICLE SPEED           ~318

         WAITING                  ~319

            SET TARGET
         BRAKE PRESSURE           ~320

         SET FORWARD/
       REARWARD RUNNING           ~321
       CLUTCH TO NEUTRAL

         SET BUCKET
         STOP ANGLE               ~322

         WAITING                  ~323

                    END
```

# FIG.26

FIG.27

**FIG.28**

FIG.29

FIG.30(a)

FIG.30(b)

FIG.30(c)

```
                    ┌──────────┐
                    │  START   │
                    └────┬─────┘
                         ▼
            ┌────────────────────────┐
            │  SET TARGET BRAKE      │──400
            │  PRESSURE TO ZERO      │
            └───────────┬────────────┘
                        ▼
            ┌────────────────────────┐
            │  SET FORWARD/          │
            │  REARWARD RUNNING      │──401
            │  CLUTCH TO FORWARD     │
            │  RUNNING               │
            └───────────┬────────────┘
                        ▼
            ┌────────────────────────┐
            │  SET FIRST/SECOND/     │
            │  THIRD SPEED CLUTCH    │──402
            │  TO FIRST SPEED        │
            └───────────┬────────────┘
                        ▼
            ┌────────────────────────┐
            │  SET VEHICLE SPEED     │──403
            └───────────┬────────────┘
                        ▼
               ┌─────────────────┐
               │    WAITING      │──404
               └────────┬────────┘
                        ▼
            ┌────────────────────────┐
            │  SET TARGET            │──405
            │  BRAKE PRESSURE        │
            └───────────┬────────────┘
                        ▼
            ┌────────────────────────┐
            │  SET FORWARD/          │
            │  REARWARD RUNNING      │──406
            │  CLUTCH TO NEUTRAL     │
            │  STATE                 │
            └───────────┬────────────┘
                        ▼
            ┌────────────────────────┐
            │  SET BUCKET STOP ANGLE │──407
            └───────────┬────────────┘
                        ▼
                   ◇─────────────◇        408
                  ╱   BUCKET       ╲    NO
                 ◇ MOVEMENT COMPLETED ◇────►
                  ╲       ?         ╱
                   ◇─────────────◇
                        │ YES
                        ▼
            ┌────────────────────────┐
            │  SET BUCKET STOP ANGLE │──409
            └───────────┬────────────┘
                        ▼
                   ◇─────────────◇        410
                  ╱    BOOM        ╲    NO
                 ◇ MOVEMENT COMPLETED ◇────►
                  ╲       ?         ╱
                   ◇─────────────◇
                        │ YES
                        ▼
            ┌────────────────────────┐
            │  SET BUCKET STOP ANGLE │──411
            └───────────┬────────────┘
                        ▼
               ┌─────────────────┐
               │    WAITING      │──412
               └────────┬────────┘
                        ▼
                   ┌─────────┐
                   │   END   │
                   └─────────┘
```

# FIG.31

**FIG.32(a)**

**FIG.32(b)**

**FIG.32(c)**

FIG.33

**FIG.34**

START

WAIT AT
ORIGINAL POINT — 600

601 START — NO

YES

602
D AND W
→ INPUTTED
? — NO

YES

START AUTOMATIC
OPERATIONS — 603

INITIALIZE
DISTANCE COUNTER — 604

FORWARD RUNNING
TO ROOFED SHED — 605

606
OPERATION
START STATION
ON SHED SIDE
? — NO

YES

STOP — 607

SET WORKING
MACHINE HEIGHT — 608

MEASURE RUNNING
DISTANCE
FOR SCOOPING — 609

$\alpha \longleftarrow \alpha + \alpha'$ — 610

REARWARD
RUNNING — 611

612
ORIGINAL
POINT
? — NO

YES

STOP — 613

FORWARD
RUNNING — 614

615
OPERATION
START STATION ON
HOPPER SIDE — NO

YES

STOP — 616

MATERIAL
DUMPING — 617

REARWARD
RUNNING — 618

619
ORIGINAL
POINT? — NO

YES

STOP — 620

621
DISTANCE COUNTER
VALUE $\alpha > W$ — NO

YES

TO FIG. 36

FIG.35

64

FROM FIG. 35

FORWARD RUNNING TO ROOFED SHED — 622

OPERATION START STATION ON SHED SIDE — 623

NO

YES

STOP — 624

CONTACT BUCKET BOTTOM SURFACE WITH GROUND — 625

SCOOPING — 626

REARWARD RUNNING — 628

ORIGINAL POINT? — 629

NO

YES

STOP — 630

FORWARD RUNNING TO UNROOFED SHED — 631

OPERATION START STATION ON SHED SIDE ? — 632

NO

YES

STOP — 633

CONTACT BUCKET BOTTOM SURFACE WITH GROUND — 634

SCOOPING — 635

MATERIAL DUMPING — 636

REARWARD RUNNING — 637

ORIGINAL POINT? — 638

NO

YES

STOP — 639

END

FIG.36

65

**FIG.37(a)**

**FIG.37(b)**

**FIG.37(c)**

**FIG.38(a)**

**FIG.38(b)**

FIG.39(a)

FIG.39(b)

FIG.39(c)

**FIG.40(a)**

**FIG.40(b)**

**FIG.40(c)**

**FIG.40(d)**

**FIG.40(e)**

FIG.41(a)

FIG.41(b)

FIG.41(c)

**FIG.42**

**FIG.43**

# INTERNATIONAL SEARCH REPORT

International Application No PCT/JP92/01308

| I. CLASSIFICATION OF SUBJECT MATTER (if several classification symbols apply, indicate all) [6] |
|---|

According to International Patent Classification (IPC) or to both National Classification and IPC

Int. Cl$^5$  E02F3/43, 9/20, 9/22

| II. FIELDS SEARCHED |
|---|

| Minimum Documentation Searched [7] | |
|---|---|
| Classification System | Classification Symbols |
| IPC | E02F3/43, 9/20, 9/22 |

Documentation Searched other than Minimum Documentation
to the Extent that such Documents are Included in the Fields Searched [8]

Jitsuyo Shinan Koho                     1962 - 1991
Kokai Jitsuyo Shinan Koho           1971 - 1991

| III. DOCUMENTS CONSIDERED TO BE RELEVANT [9] | | |
|---|---|---|
| Category [*] | Citation of Document, [11] with indication, where appropriate, of the relevant passages [12] | Relevant to Claim No. [13] |
| A | JP, A, 3-2430 (Mitsubishi Heavy Industries, Ltd.), January 8, 1991 (08. 01. 91), (Family: none) | 1-13 |
| A | JP, A, 3-2414 (Ministry of Construction Kanto Regional Construction Bureau, Mitsubishi Heavy Industries, Ltd.), January 8, 1991 (08. 01. 91), (Family: none) | 1-13 |
| A | JP, A, 59-106634 (Caterpillar Mitsubishi Ltd.), June 20, 1984 (20. 06. 84), (Family: none) | 1-13 |
| A | JP, A, 59-38434 (Hitachi Construction Machinery Co., Ltd.), March 2, 1984 (02. 03. 84), (Family: none) | 1-13 |
| A | JP, A, 58-24036 (Mannesmann AG.), February 12, 1983 (12. 02. 83), | 1-13 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

| IV. CERTIFICATION | |
|---|---|
| Date of the Actual Completion of the International Search | Date of Mailing of this International Search Report |
| December 2, 1992 (02. 12. 92) | January 7, 1993 (07. 01. 93) |
| International Searching Authority | Signature of Authorized Officer |
| Japanese Patent Office | |

Form PCT/ISA/210 (second sheet) (January 1985)